# EUROPEAN PATENT SPECIFICATION

(11) **EP 4 454 204 B1**
(45) Date of publication and mention of the grant of the patent: **05.03.2025**
(21) Application number: 23757828.1
(22) Date of filing: 04.04.2023
(51) Int. Cl.: G06Q 10/087, G06Q 20/10, G06Q 20/20, G06Q 20/40, H04L 9/40, G06Q 20/12, H04L 9/00, G06Q 20/36, H04L 9/32

(54) **METHODS AND SYSTEMS FOR DYNAMIC UPDATE TO ACCESS CONTROL RULES IN A COMPUTING SYSTEM BASED ON BLOCKCHAIN MONITORING**
VERFAHREN UND SYSTEME ZUR DYNAMISCHEN AKTUALISIERUNG VON ZUGANGSSTEUERUNGSREGELN IN EINEM COMPUTERSYSTEM AUF BASIS VON BLOCKCHAIN-ÜBERWACHUNG
PROCÉDÉS ET SYSTÈMES DE MISE À JOUR DYNAMIQUE POUR ACCÉDER À DES RÈGLES DE COMMANDE DANS UN SYSTÈME INFORMATIQUE D'APRÈS UNE SURVEILLANCE DE CHAÎNE DE BLOCS

(30) Priority: 05.05.2022 US 202263338544 P; 07.07.2022 US 202217859169
(43) Date of publication of application: 30.10.2024
(73) Proprietor: Shopify Inc., Ottawa, ON K2P 2L8 (CA)
(72) Inventor: LEE, John Jong-Suk, Ottawa, Ontario K2P 2L8 (CA)
(74) Representative: Murgitroyd & Company
(86) International application number: PCT/CA2023/050452
(87) International publication number: WO 2023/212801

(56) References cited:
- WO-A1-2020/014580
- RU-A- 2018 132 715
- RU-A- 2018 132 715
- US-A1- 2019 294 817
- US-A1- 2019 294 817
- US-A1- 2019 333 054
- US-A1- 2020 053 081
- US-A1- 2020 053 081
- US-A1- 2021 133 713
- US-A1- 2021 366 586
- US-A1- 2022 101 316
- US-A1- 2022 101 316

## Description

### CROSS-REFERENCE TO RELATED APPLICATIONS

The present application claims priority to US provisional patent application no. 63/338,544 filed May 5, 2020.

### TECHNICAL FIELD

The present disclosure relates to computer-implemented access control systems and methods and, in particular, systems and methods that dynamically update access control rules based on changes in blockchain data.

### BACKGROUND

In many online access control systems, a rule set may determine the conditions under which access is granted or denied to a requesting device. For example, a rule may require that the requesting device provide authorized credentials prior to providing access to a resource. As another example, a rule may provide that a requesting device with a particular characteristic is blocked from accessing a resource, *e.g.* a certain device type, geographic location, operating system, or other features or characteristics of the requesting device. It will be appreciated that in distributed networks where access control to centrally stored data or resources represents a constraint on the security of that data or resources. It will also be appreciated that the rules used to govern that access are indicative of the security and integrity of that data or resources. Examples of rules that can be used conventionally include those based on multi-factor authentication, biometric protocols, and group security policies and the like.

Irrespective of the underlying principles that are used to implement the secure access to data or resources, in order to implement a rule set to govern access control, an administrator must determine the conditions for granting or denying access in advance and then encode those conditions in suitable access control rules.

### BRIEF DESCRIPTION OF THE DRAWINGS

Embodiments will be described, by way of example only, with reference to the accompanying figures wherein:
FIG. 1 is a simplified example system;
FIG. 2 is a high-level schematic diagram of a computing device;
FIG. 3 shows a simplified organization of software components stored in a memory of the computing device of FIG. 2;
FIG. 4 graphically illustrates an example segment of a blockchain recording non-fungible tokens;
FIG. 5 shows, in flowchart form, one example method of controlling access to an online resource;
FIG. 6 shows, in flowchart form, one example method of dynamically adjusting an access condition based on blockchain network status;

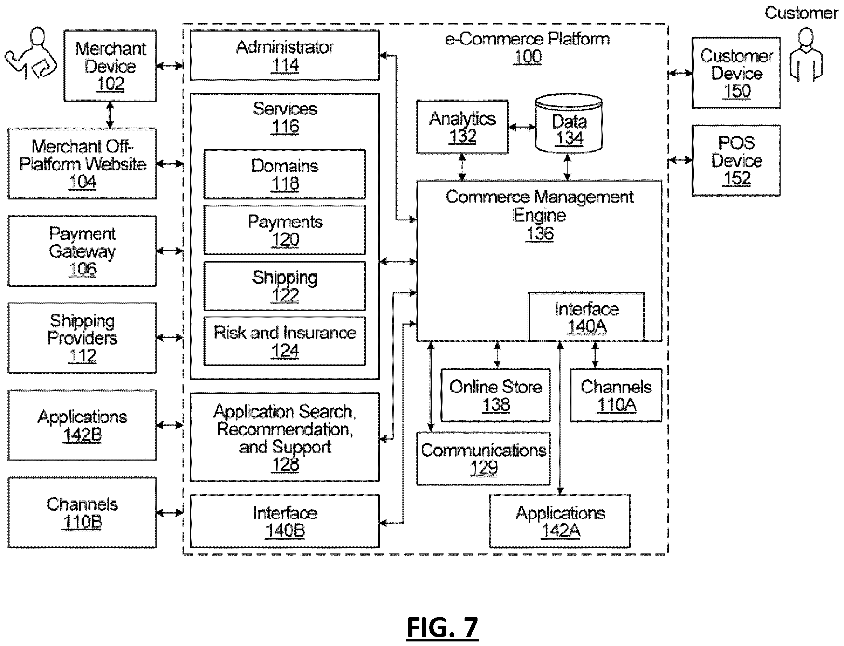

FIG. 7 is a block diagram of an e-commerce platform, in accordance with an example embodiment; and
FIG. 8 is an example of a home page of an administrator, in accordance with an example embodiment.

Like reference numerals are used in the drawings to denote like elements and features.

### DETAILED DESCRIPTION OF EMBODIMENTS

There continues to be a requirement to provide enhanced, or indeed just alternative, mechanisms to control access to data or resources within a distributed network. The present application provides for the use of blockchain based technologies to control network access to data or resources that are accessed across a distributed network. In such a network, the data or resources may be stored at one or more nodes within the network, with a requirement for that data or resources to be accessed from one or more different remote notes. In such a distributed network, it is known to provide security through the use of rules which define access security protocols dependent on the nature of request. In accordance with the present teaching, the use of tokens which are managed using a blockchain can be used to constrain access to data or resources. This incorporation of blockchain based token access leverages off inherent security features that are associated with blockchain technologies- resilience, transparency, and encryption, and can be used to control access to resources based on presentation of authorised tokens. In one aspect, the present application discloses a computer-implemented method that may include generating an access condition at a server with regard to an online resource. The access condition may be generated by identifying a token collection associated with access to the online resource, wherein ownership of the tokens is managed using a blockchain, obtaining, from a blockchain network associated with the blockchain, data regarding the token collection including a count of tokens circulating and ownership data, and selecting, as the access condition based on the data regarding the token collection, one or more token criteria based on an intended number of qualified wallets. The method may further include receiving, at the server, an access request for the online resource from a user device associated with a wallet; obtaining token data from the blockchain network with regard to the wallet; and authorizing access to the online resource for the user device responsive to determining that the token data meets the access condition.

In some implementations, obtaining data regarding the token collection may include querying a blockchain node.

In some implementations, determining that the token data meets the access condition includes determining that tokens owned by the wallet feature the one or more token criteria.

In some implementations, generating the access condition includes updating a previous access condition with regard to the online resource. In some cases, the previous access condition includes a token quantity as a token criteria, and updating includes changing the token quantity as the one or more token criteria. In some cases, the previous access condition specifies a token attribute as a token criteria, and updating includes specifying a different token attribute as the one or more token criteria. In some cases, the method may further include obtaining, from the blockchain network, updated data regarding the token collection and further revising the access condition based on the updated data.

In some implementations, selecting includes retrieving from memory previous sets of token criteria included in previous access conditions for the online resource, and selecting the one or more token criteria that result in fewer than the intended number of qualified wallets while not selecting one of the previous sets as the one or more token criteria.

In some implementations, the method may further include determining an inventory count with regard to the online resource from an inventory system, and wherein generating further includes determining the intended number of qualified wallets based on the inventory count.

In some implementations, identifying the token collection includes receiving, from a remote device, an association between the token collection and the online resource and storing the association in relation to the online resource.

In some implementations, the count of tokens circulating includes a count of tokens minted minus a count of tokens destroyed.

In another aspect, the present application discloses a computing system including one or more processing units, one or more data storage units, and memory storing processor-executable instructions that, when executed by the one or more processing units, are to cause the processing units to carry out the operations of one or more of the methods described herein.

In yet another aspect, a non-transitory, computer readable storage medium is disclosed. The medium may store processor-executable instructions that, when executed, cause one or more processors to carry out the operations of one or more of the methods or processes described herein.

Other example embodiments of the present disclosure will be apparent to those of ordinary skill in the art from a review of the following detailed descriptions in conjunction with the drawings.

In the present application, the term "and/or" is intended to cover all possible combinations and sub-combinations of the listed elements, including any one of the listed elements alone, any sub-combination, or all of the elements, and without necessarily excluding additional elements.

In the present application, the phrase "at least one of ... and... " is intended to cover any one or more of the listed elements, including any one of the listed elements alone, any sub-combination, or all of the elements, without necessarily excluding any additional elements, and without necessarily requiring all of the elements.

In the present application, the terms "e-commerce platform" or "e-commerce system" refers broadly to a computerized system (or service, platform, etc.) that facilitates commercial transactions, namely buying and selling activities over a computer network (e.g., Internet). An e-commerce platform may, for example, be a free-standing online store, a social network, a social media platform, and the like. Customers can initiate transactions, and associated payment requests, via an e-commerce platform, and the e-commerce platform may be equipped with transaction/payment processing components or delegate such processing activities to one or more third-party services. An e-commerce platform may be extendible/extensible by connecting one or more additional sales channels representing platforms where products can be sold. The e-commerce platform may serve one merchant in some implementations. The e-commerce platform may be a multi-merchant platform in other cases, where each merchant is able to use some or all of the available services to configure an online storefront and provide commerce services to customers of the online storefront. A multi-merchant e-commerce platform may operate across a range of geographic regions, and may operate in multiple countries, currencies, and time zones.

Some of the examples below refer to a "product record". A product record in this context may refer to data regarding a specific product item, or a specific version of that product item. The data may include details of the product item, technical specifications, narrative description, image(s) of the product item, customer reviews, pricing information, inventory information, shipping information, or any other product data of a similar nature. In some cases a product record may be a web page. In some cases, the product record may be an XML record. The product record may be embodied in any other suitable mark-up language or other coding language.

The growth of blockchain networks has led to the development of non-fungible tokens (NFT). Each NFT is a unique combination of characteristics/attributes and/or media.

In many implementations, a smart contract may be created for the purpose of minting and/or tracking NFTs. The Ethereum blockchain network has an associated standard, ERC-721, providing a reference implementation of a smart contract for tracking and managing NFTs. Various other standards, such as ERC-1155 for non-fungible tokens and/or ERC-20 for fungible tokens, may apply. In some cases, the NFTs generated by a smart contract may form a collection, in that the NFTs generated by that smart contract have some limited universe of possible attributes or characteristics. In some cases, the NFTs in a collection are computer-generated art in which various units of digital art are randomly selected and superimposed (or otherwise combined) to generate each unique digital media. The units may correspond to particular characteristics, such as various eyes, mouths, hats, accessories, etc., used to generate a unique digital image of a character. In some other cases, the NFTs in a collection may be images or videos that relate to a particular type of activity, sport, or other interest, such as images or videos of particular football players, video clips from baseball plays, photographs of a specific celebrity or group of celebrities, etc. Example NFT collections include, for example, the "Bored Ape" collection, the "NBA^{™} TopShot" collection, or the "Invisible Friends" collection.

A smart contract is executable computer code recorded on the blockchain that, when properly "called" in a subsequent blockchain transaction, executes so as to carry out its defined operations. In the case of an NFT smart contract, a minting operation may cause the smart contract to produce a new unique NFT that corresponds to a particular one unique NFT. That unique NFT may be digital art, an image, a video, or a combination thereof in some examples. Each NFT may have associated attributes or characteristics. Example attributes include the elements pseudo-randomly selected for generation of the digital image, such as specific eyes, mouth, accessories, etc., for an image of a character. Another set of example attributes may be the context or characteristics of a particular image or video, such as the identity of the person/player featured, the team or teams involved, the date, the score, the type of play, or other such features.

Once NFTs are minted, they may be made available through an online marketplace in some cases. Various wallets, *i.e.* network-connected computing devices with blockchain wallet software operating thereon, may initiate blockchain transactions to obtain and/or transfer NFTs. Ownership of an NFT by a wallet is recorded on-chain and is verifiable by third parties. In some cases, a wallet may own a plurality of NFTs. The ownership of those NFTs may be verifiable by third parties based on a query to the blockchain network, *i.e.* to a blockchain node, providing data from the wallet, such as a public key associated with the wallet. In some cases the query may identify the NFTs by way of unique identifiers, or by way of an identifier for the NFT collection to which they belong. The blockchain node may respond by providing verification that the public key provided is associated with the NFT as reflected in the data recorded on the blockchain. The NFT smart contract may provide functions for verifying NFT ownership data.

While many NFTs have been generated to represent ownership interest in some auto-generated digital media, in other cases NFTs may be used as a "proof-of-purchase" or a receipt or record of ownership or investment. In this context, NFTs may indicate a history of purchases or certain product items and, in some cases, record current ownership of those product items. An NFT may be as simple as a record of purchase (receipt) for various common items from a grocery store. In some cases, the NFT may be a record of ownership of a non-perishable real-world item, such as real estate, a financial instrument, an automobile, etc.

In yet other examples, NFTs may be used as a "ticket" for access or as a "proof-of-attendance". For instance, a concert ticket may be minted and recorded as an NFT, which when validated at a venue (e.g. using a QR code scanner or the like to obtain a wallet identifier and an NFT identifier and then validate ownership via a blockchain query) grants the holder of the user device access to the concert. As another example, an NFT may record the fact of attendance at an event, such as a training course or a social event. NFTs may signal membership in a club, attendance at a restaurant, participation or level or progress in an online game, or any other such events.

Access control systems may rely on pre-generated rule sets that specify conditions for granting or denying access to a resource. An administrator of such a system must usually determine the applicable condition or combination of conditions in advance and embody them in suitable access control rules. The system then, in response to a request for access from a requesting device, retrieves the access control rules and assesses whether the requesting device and/or its present context meets the condition or combination of conditions specified in one of the access control rules. Access to the resource is then granted or denied based on that assessment. In this manner, the system gates access to the resource based on the condition or combination of conditions.

In some situations, access control rules may be set that include conditions relating to token holdings. That is, an access control rule may limit access to the online resource to user devices that have a blockchain wallet associated with ownership of one or more tokens or types of tokens. The tokens may be fungible or non-fungible. The condition may indicate that the token or tokens be from one or more specific collections or categories of tokens. The condition may indicate that the token from a certain collection is to have one or more particular attributes or features. There are a range of token-based access conditions that may be set.

One of the challenges of generating access control rules based on token ownership, is that the prevalence of certain attributes or combinations of characteristics of NFTs in some collections may be unknown in advance and can change over time as tokens are minted and/or destroyed. Moreover, number of tokens in circulation and the degree of concentration/distribution of ownership both vary over time as token transfers occur on the blockchain network. In addition, the gated resource may change over time. For example, the limited access to a resource may be partly based on a limited available quantity of the resource. For instance, the resource may be a specific product or item of which there is a limited quantity available at any given time. That quantity may fluctuate over time as the resource is generated, sold, used, returned, etc. The resource may be a physical consumer item, computing resources, a commodity, a service, etc.

The fixed nature of an access control rule can lead to failed transactions and requests as more requests for access are received and permitted based on the access rule than can be fulfilled based on the resource availability. Alternatively, the access control rule may result in squandered or unused resources if too few requests are permitted by the access rule.

Advantageously, example systems and methods described below provide for improved token-based access control systems by measuring changes in token metrics and/or resource availability and dynamically updating access control conditions in response. The system may facilitate faster and more accurate rule adaptation based on computing-based detection of state or condition changes in the blockchain network that trigger access condition adaptation. This may prevent or lessen under or over admission of user devices to resource access. At the same time, the security of access to the network data or resources is maintained through the requirement to use the tokens as an authenticator of right to access.

In some examples, the online resource may be a webpage, server login, computer game, livestream, or other such online resource to which access may be controlled. The use of blockchain managed tokens can be used to effectively limit the number of tokens that are initially authorised for access purposes. The veracity and authenticity of any presented token is then controlled through the underlying capabilities of blockchain to provide data confidentiality, integrity, and verification. In an illustrative example, the online resource may be an e-commerce product or service. That is, access to one or more products or services available via an e-commerce system or platform may be controlled based on ownership of one or more tokens (e.g. NFTs) having certain characteristics or attributes. In some cases, the access is to a version of a webpage or other online resource associated with the product or service that includes a discount or incentive not otherwise available for that product or service. The online resource may be accessed by a computing device via a webpage or mobile app interface, wherein a remote server, e.g. an e-commerce platform, determines that access by the computing device is permitted based on verification that one or more NFTs meeting the access conditions are associated with the computing device. Determining that the NFTs are associated with the computing device may be based on obtaining blockchain data from a wallet application installed and operating on the computing device and validating that blockchain data via a blockchain network.

In the example case of an e-commerce platform, a merchant account may have an association with an NFT collection. In some cases, the merchant account may designate the NFT collection as associated with all of the merchant's available products or with a sub-set of the merchant's available products. In some cases, the sub-set may be a certain category of limited access products, such as limited edition, discounted, or early access versions of the products. The merchant account may include an access rule that specifies token criteria, such as an NFT attribute or combination of attributes, as the access condition for gaining access to at least one of the merchant products. In some cases, the merchant account may further specify a quantity of the restricted-access products available or an intended number of users able to access the restricted-access products.

It will be appreciated that in some cases, only one NFT of a collection may have the specified combination of attributes. In some other cases, many NFTs of a collection may have the specified combination of attributes. The combination may be a single attribute in some examples. The combination of attributes may not include all types of attributes of the NFTs. For example, the combination of attributes in a digital art context may specify a particular style of hat and eye colour. Other attributes of the digital art, including mouth, accessories, etc., may not be part of the condition. In another example, in the context of a sports video clip NFT, like NBA^{™} TopShots, the condition may specify a particular player, e.g. LeBron James, and a particular type of play, *e.g.* dunk, but the teams involved, the date, and score may not be part of the condition.

In one aspect, the platform may set the access control rule condition based on blockchain data obtained from the blockchain network, including a quantity of tokens circulating and ownership data regarding those tokens. For example, if the merchant account associates a restricted-access product with a particular NFT collection, the platform may obtain data through querying a blockchain node regarding the NFT collection. The data may include the number of NFTs minted in that collection, details of attributes of minted NFTs in that collection, and/or ownership data regarding that collection (e.g. a count of minted NFTs held in single wallets, versus widely distributed). Using that data, the platform may surface attributes or combinations of attributes and the associated number of wallets holding one or more NFTs having those attributes.

The platform may display, on a merchant device, token criteria, such as attributes or combinations of attributes and the associated number of wallets holding NFTs that have those attributes or combinations of attributes. The merchant may then select an attribute or combination of attributes that correspond to an intended number of qualifying wallets. For example, if a particular attribute is found in NFTs held by 100 wallets, and the merchant intends for up to a hundred purchasers to have potential access to a product, the merchant may select that particular attribute as the condition for access. Alternatively, the platform may automatically select the token criteria, such as a number of tokens or a token attribute or combination of attributes, to form the condition for access on the basis of an intended number of qualifying wallets. In some implementations, the intended number of qualifying wallets may be set based on an inventory value associated with the product. The number of qualifying wallets may be set as a multiple of the inventory value in some cases.

In another aspect, once the initial access rule is set, whether automatically or with merchant input, the platform continues to monitor the state of the NFT collection and, if more than a threshold change in NFT collection metrics occurs, it may trigger a redetermination of the access rule condition. An NFT collection metric may include the number of tokens circulating. The number of tokens circulating may be the number minted less the number destroyed. In some cases, the count of number of tokens circulating may exclude tokens minted and held in a "treasury" wallet, e.g. a wallet associated with the NFT collection owner or originator or smart contract, which holds NFTs created but not yet transferred or distributed to general public wallets.

Another NFT collection metric may include the count of wallets holding the NFTs or NFTs having a particular attribute or combination of attributes. This may be different from the count of circulating NFTs or circulating NFTs having a particular attribute or combination of attributes, since a single wallet may hold multiple NFTs, and the count of wallets is indicative of the number of individual owners, *i.e.* the degree of concentration or dilution of ownership.

A further NFT collection metric may be a measure of prevalence of attributes. That is, over time, a particular attribute or combination of attributes may appear in association with minted tokens, or may become more commonplace than it was previously. Given the nature of NFT minting in many smart contract implementations, it cannot necessarily be predicted which attribute or combination of attributes will arise in association with minted tokens.

In some cases, a redetermination of the access rule condition may also or alternatively be triggered based on a change in product inventory count or the number of intended qualifying wallets (which may be linked). The platform may obtain periodic or real-time inventory data from an inventory system, which may or may not be part of the e-commerce platform.

In yet other cases, the redetermination may be cyclical based on a cycle of inventory replenishment. For instance, a limited-access product may be made available in a certain quantity on a schedule. For example, each week a new tranche of N items may be made available, and each week the platform may be configured to re-determine a suitable token-based access rule based on the state of the NFT collection as indicated by the NFT collection metrics.

In some implementations, a revised or update access condition may be determined by the platform and saved as an updated access control rule, which is then applied to gate access to associated products on the e-commerce platform. In other implementations, the merchant account may be notified of a suggested update to the access control rule and, in response to an acceptance notification from the merchant account, the platform applies the update and gates access accordingly.

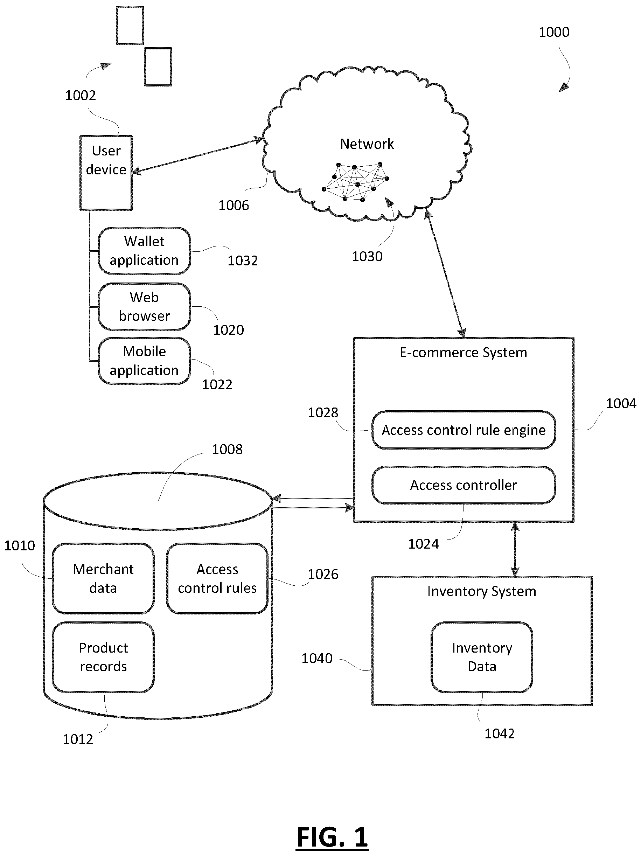

Reference will now be made to FIG. 1, which diagrammatically illustrates a simplified example system 1000 in accordance with an aspect of the present application. In this example, the system 1000 includes a network-connected server, which in this example is an e-commerce system 1004, and a plurality of user devices 1002. The user devices 1002 and e-commerce system 1004 may communicate over a network 1006. The network 1006 may include interconnected wired and/or wireless networks, including the Intemet. The user devices 1002 may include a range of computing devices, such as laptops, desktops, tablets, smartphones, and the like.

The e-commerce system 1004 may be implemented using one or more servers. The e-commerce system 1004 may include data storage 1008, which may include one or more databases or other data structures within or accessible to the servers. The data storage 1008 may include merchant data 1010 regarding merchant accounts with the e-commerce system 1004, including merchant identifiers and settings and parameters for respective merchants. The data storage 1008 may further include product records 1012. In some cases, each merchant account has a set of associated product records 1012 reflecting the products or services offered via that merchant account. The product records 1012 may include details regarding one or more products, images, pricing, shipping information, technical parameters, textual description, reviews, or other data regarding the product. Product records 1012 may be grouped into classes and/or subclasses.

The user devices 1002 may include a web browser 1020 and/or a mobile application 1022 through which the user device 1002 is able to connect with the e-commerce system 1004 in order to browse a merchant's online store interface so as to view available product or services. The web pages or other resources served to the user devices 1002 via the web browser 1020 or mobile application 1022 may be generated or obtained from the stored product records 1012. As a user device 1002 searches or browses products from a particular merchant, the e-commerce system 1004 may retrieve the corresponding product records 1012 for causing display of the product data on the user device 1002. In some implementations, the merchant data 1010 may include settings or parameters that configure the UI and presentation served to the user devices 1002, thereby providing users with a merchant-specific storefront within which to browse and purchase items.

The e-commerce system 1004 includes an access controller 1024. The access controller 1024 may be implemented by way of suitable computer executable code for regulating access to some or all of the product records 1012 and other data within the e-commerce system 1004. In one example, the access controller 1024 may limit access to some or all of the features or options available by way of user authentication. That is, user's, such as customers or merchants, accessing the e-commerce system using a remote device must provide valid user credentials to be authenticated. Once authenticated, the user is granted the level of access corresponding to their user type or class. A merchant user may gain access to edit its product records 1012, store design, and some of its merchant data 1010. In some cases, a customer user need not provide any user credentials and is permitted to browse merchant stores or to make purchases in a "guest" mode. If credentials are provided, the user may be "logged in" to a user account that enables access to additional features or saved preferences, including purchase history, loyalty points, saved purchase credentials (e.g. credit card details), or other user-specific features.

In this example, the network 1006 further includes a blockchain network 1030. The blockchain network 1030 may operate in accordance with a blockchain protocol, such as Bitcoin or Ethereum, as examples. The user device 1002 may include a wallet application 1032, which is a blockchain application on the user device 1002 that may store blockchain-related data. In some cases, the wallet application 1032 may securely store public and private key pairs associated with the user device 1002. The public keys may be shared and made publicly available for the purpose of receiving blockchain-based data transfers of fungible or non-fungible tokens. The private keys may be stored securely and confidentially and may be used by the wallet application 1032 in certain signature operations for providing digital signatures that prove ownership of corresponding public keys, among other things. The public keys may represent or be mathematically linked to corresponding wallet addresses. The wallet address may be referenced in blockchain transactions as a sender or recipient of digital assets. A given wallet address may be recorded as the "owner" of holder of one or more digital assets, as reflected by the blockchain. The wallet application 1032 may be referred to as a simplified payment verification (SPV) client in some implementations.

The wallet application 1032, in this example, may include NFT data with regard to one or more NFTs associated with the user device 1002. The NFT data may include, in some cases, an NFT identifier, a public key associated with the wallet (e.g. a wallet identifier or address), a transaction identifier associated with ownership of the NFT, an NFT collection identifier, a smart contract identifier, or other such data regarding the NFT and/or its ownership by the user device 1002. In some cases, the NFT data may include additional data regarding the NFT itself, such as associated media (e.g. image or video), attributes, or a textual description.

**In** some implementations, the wallet application 1032 may be configured to provide data to the e-commerce system, such as wallet address information and/or NFT data. For example, the wallet application 1032 may use the open-source WalletConnect protocol to connect and interact with decentralized applications (dApps). Other protocols may be used in other implementations. In some cases, the connect protocol may be used to connect the wallet application 1032 to the mobile application 1022. In some cases the connect protocol may be used to connect the wallet application 1032 to the web browser 1020. In short, the wallet application 1032 is configured such that it is able to securely provide wallet address and/or NFT data to the e-commerce system regarding NFTs purportedly owned by the user device 1002, and/or to authenticate the user device's 1002 ownership of certain public keys associated with particular NFTs recorded on the blockchain network 1030.

The access controller 1024 may be configured to control access to one or more of the product records 1012 based upon access control rules 1026. Each access control rule 1026 may specify one or more product records 1012, or a class of product records 1012, to which it applies. Each access control rule 1026 may be associated with a specified one of the merchant accounts. Each access control rule 1026 may further include a condition for obtaining access to the associated one or more product records 1012 or class of product records 1012. The condition, in these examples, includes ownership of one or more NFTs meeting token criteria such as a specified set of attributes.

The e-commerce system 1004 may further include an access control rule engine 1028 configured to obtain blockchain data from the blockchain network, such as data regarding the number of tokens in circulation and/or ownership data regarding a token collection. The access control rule engine 1028 may be configured to determine when to modify or update an access control rule 1026, *e.g.* to detect a trigger condition for causing a rule update. The access control rule engine 1028 may monitor the state of the blockchain network and determine when more than a threshold change in state occurs, such as a more than threshold change in count of tokens in circulation, or count of individual wallets holding those tokens, or number or percentage of tokens having a certain attribute, etc. Based on the network state information and a number of intended qualifying wallets associated with the access control rule 1026 and/or the product record 1012 involved, the access control rule engine 1028 may modify the access control rule 1026 to ensure that the access condition will result in a particular number of qualified wallets.

The system 1000 may further include an inventory system 1040, which stores inventory data 1042 associated with the product records 1012. The inventory system 1040 may be a system separate from the e-commerce system 1004 or may be integrated therein. It is shown in FIG. 1 as a separate system for the ease of discussion. The inventory data 1042 may include data regarding a current number of items available associated with a specific product having a product record 1012. In some cases, the inventory data 1042 may indicate location of the items if stored in different warehouses or other locations. In some cases, the inventory data 1042 may include data regarding scheduled or expected increases to inventory of a product item. In some cases, the inventory data 1042 includes data regarding hard or soft holds on inventory items subject to prospective purchases or purchases awaiting fulfilment operations.

When a user device 1002 seeks to access one of the product records 1012, the e-commerce system 1004 determines whether a stored one of the access control rules 1026 applies to that product record 1012 and, if so, then the access controller 1024 determines whether the user device 1002 meets the requisite condition(s) in the access control rule 1026. The condition may include ownership of an NFT meeting specified token criteria. Accordingly, the e-commerce system may obtain (or may have previously obtained) wallet data from the user device 1002 and may query the blockchain network 1030 to validate that the user device 1002 is associated with an NFT as owner according to the blockchain and that the NFT has the requisite certain attributes. The e-commerce system 1004 may determine from the wallet data provided by the user device 1002 whether it has validated its ownership of a wallet address by providing a verified digital signature associated with the address and, if so, the e-commerce system 1004 may then determine whether that wallet address holds any NFTs by querying the blockchain network 1030. In some cases, the wallet data provided by the user device 1002 may include identifier(s) for one or more NFTs in addition to wallet address information. In some cases, a smart contract on chain within the blockchain network may provide an ownership verification function. For example, in the context of Ethereum, an ERC-721 compliant smart contract may provide the ownerOf() function for determining the blockchain-recorded owner of a particular NFT.

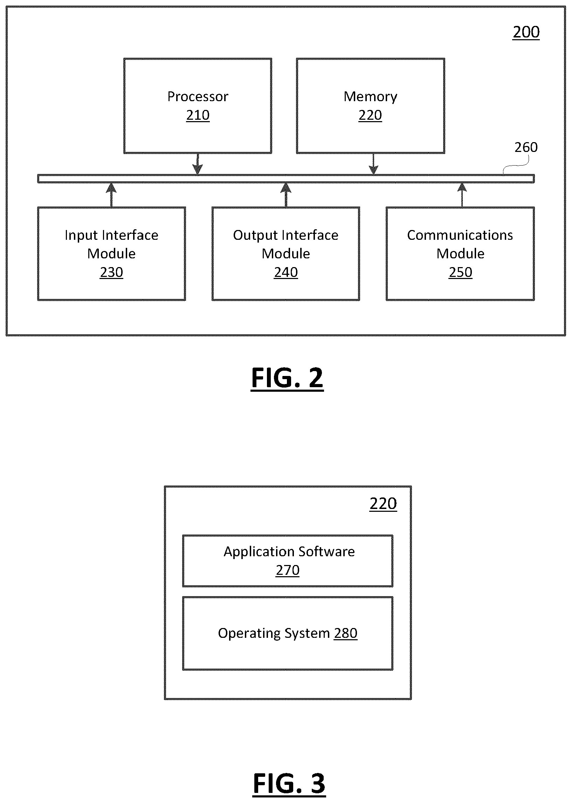

The e-commerce system 1004 and/or the user devices 1002 may be implemented using one or more computing devices. FIG. 2 is a high-level diagram of an example computing device 200. The example computing device 200 includes a variety of modules. For example, the example computing device 200 may include a processor 210, a memory 220, an input interface module 230, an output interface module 240, and a communications module 250. As illustrated, the foregoing example modules of the example computing device 200 are in communication over a bus 260.

The processor 210 is a hardware processor. The processor 210 may, for example, be one or more ARM, Intel x86, PowerPC processors, or the like.

The memory 220 allows data to be stored and retrieved. The memory 220 may include, for example, random access memory, read-only memory, and persistent storage. Persistent storage may be, for example, flash memory, a solid-state drive or the like. Read-only memory and persistent storage are a computer-readable medium. A computer-readable medium may be organized using a file system such as may be administered by an operating system governing overall operation of the example computing device 200.

The input interface module 230 allows the example computing device 200 to receive input signals. Input signals may, for example, correspond to input received from a user. The input interface module 230 may serve to interconnect the example computing device 200 with one or more input devices. Input signals may be received from input devices by the input interface module 230. Input devices may, for example, include one or more of a touchscreen input, keyboard, trackball or the like. In some embodiments, all or a portion of the input interface module 230 may be integrated with an input device. For example, the input interface module 230 may be integrated with one of the aforementioned example input devices.

The output interface module 240 allows the example computing device 200 to provide output signals. Some output signals may, for example, allow provision of output to a user. The output interface module 240 may serve to interconnect the example computing device 200 with one or more output devices. Output signals may be sent to output devices by output interface module 240. Output devices may include, for example, a display screen such as, for example, a liquid crystal display (LCD), a touchscreen display. Additionally, or altematively, output devices may include devices other than screens such as, for example, a speaker, indicator lamps (such as, for example, light-emitting diodes (LEDs)), and printers. In some embodiments, all or a portion of the output interface module 240 may be integrated with an output device. For example, the output interface module 240 may be integrated with one of the aforementioned example output devices.

The communications module 250 allows the example computing device 200 to communicate with other electronic devices and/or various communications networks. For example, the communications module 250 may allow the example computing device 200 to send or receive communications signals. Communications signals may be sent or received according to one or more protocols or according to one or more standards. For example, the communications module 250 may allow the example computing device 200 to communicate via a cellular data network, such as for example, according to one or more standards such as, for example, Global System for Mobile Communications (GSM), Code Division Multiple Access (CDMA), Evolution Data Optimized (EVDO), Long-term Evolution (LTE) or the like. Additionally, or altematively, the communications module 250 may allow the example computing device 200 to communicate using near-field communication (NFC), via Wi-Fi (TM), via the Ethernet family of network protocols, using Bluetooth (TM) or via some combination of one or more networks or protocols. Contactless payments may be made using NFC. In some embodiments, all or a portion of the communications module 250 may be integrated into a component of the example computing device 200. For example, the communications module may be integrated into a communications chipset.

Software instructions are executed by the processor 210 from a computer-readable medium. For example, software may be loaded into random-access memory from persistent storage within memory 220. Additionally, or altematively, instructions may be executed by the processor 210 directly from read-only memory of the memory 220.

FIG. 3 depicts a simplified organization of software components stored in memory 220 of the example computing device 200. As illustrated, these software components include, at least, application software 270 and an operating system 280.

The application software 270 adapts the example computing device 200, in combination with the operating system 280, to operate as a device performing a particular function. While a single application software 270 is illustrated in FIG. 3, in operation, the memory 220 may include more than one application software and different application software may perform different operations. Example application software 270 includes the wallet application 1032 (FIG. 1), the web browser 1020 (FIG. 1), or the mobile application 1022 (FIG. 1).

The operating system 280 is software. The operating system 280 allows the application software 270 to access the processor 210, the memory 220, the input interface module 230, the output interface module 240 and the communications module 250. The operating system 280 may, for example, be iOS^{™}, Android^{™}, Linux^{™}, Microsoft Windows^{™}, or the like.

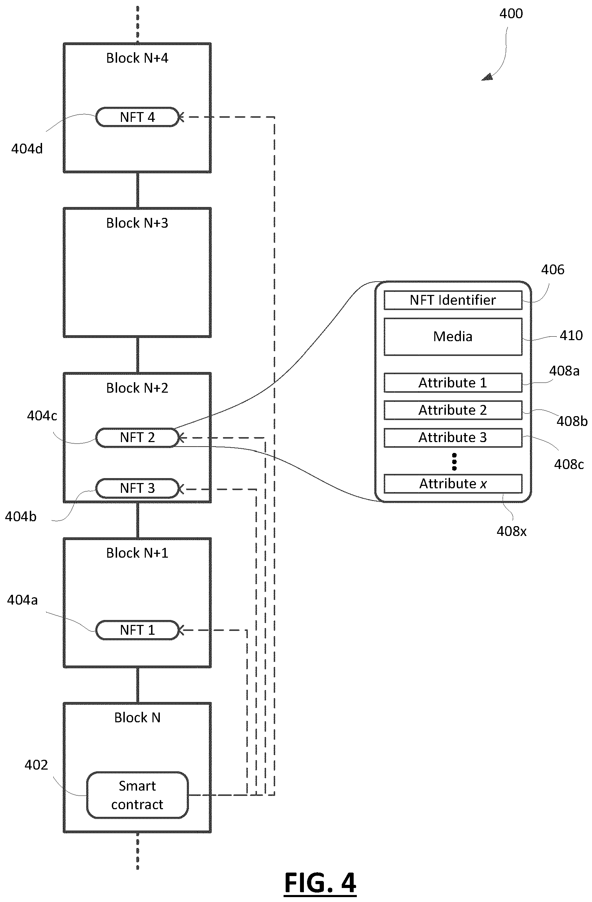

Reference is now made to FIG. 4, which illustrates an example blockchain 400. The blockchain 400 is a record of validated transactions grouped into blocks and successfully "mined" by one of the mining nodes within a blockchain network. Each block is immutable and is linked to the previous block by way of incorporating a hash of the previous block header within its own header. The functioning of a blockchain network and the variations possible under different blockchain protocols will be appreciated by those ordinarily skilled in the art.

A smart contract 402 may be implemented within the blockchain 400. In some cases, like with the Ethereum blockchain, the smart contract 402 may be executable code recorded on chain and may include functions that are available for execution by having those functions called in subsequent transactions. In this example, the smart contract 402 relates to NFT generation and/or management. That is, the smart contract 402 may have functions for minting NFTs, determining/validating ownership of those NFTs, transferring ownership of those NFTs from a current valid owner to a new owner. It will be appreciated that "ownership" is generally associated with an address, e.g. a public key value which may sometime be referred to as a wallet identifier or wallet address. A computing device that holds the corresponding private key may be used to authenticate the computing device as the owner of that public key, thereby enabling the computing device to take actions with respect to the "owned" NFT, such as transferring it to a different wallet address.

When the smart contract 402 is used to mint NFTs, the minting and ownership data for that NFT may be recorded on the blockchain 400, as indicated by 404a, 404b, 404c, 404d (collectively, 404). In some cases, the NFT data recorded on-chain includes, for example, a unique NFT identifier 406. In some instances, the NFT data recorded on chain may include one or more media files 410 or URI link(s) to one or more media files that are the subject of the NFT. The media files 410 may include, for example, an image file, a video file, an audio file, or combinations thereof.

The NFT data may further include one or more NFT attributes 408 (shown as 408a, 408b, 408c,..., 408x). The NFT attributes 408 may include contextual information regarding the NFT, such as a minting date, a category, data regarding the features or characteristics of the media file 410, or any other such attributes of the subject matter of the NFT. The NFT attributes 408 may be in the form of a list of name-value pairs, a hierarchical tree of name-value pairs, a nested structure of attributes, a linked list, an array, or in any other suitable data structure format.

The NFTs 404 minted and managed by the smart contract 402 may be considered part of a collection of NFTs in that they are all governed by the same smart contract 402. In some cases, a collection of NFTs may be minted using different smart contracts or using non-blockchain code for generation of the NFTs and off-chain software for causing recordal of the NFTs on chain in blockchain transactions. Such NFTs may nevertheless be considered part of a single collection of NFTs if they are linked in such a manner as to form a collection, such as having a link or reference within each NFT identifying those NFTs as belonging to a specific collection. In one example, an NFT collection may have a single NFT.

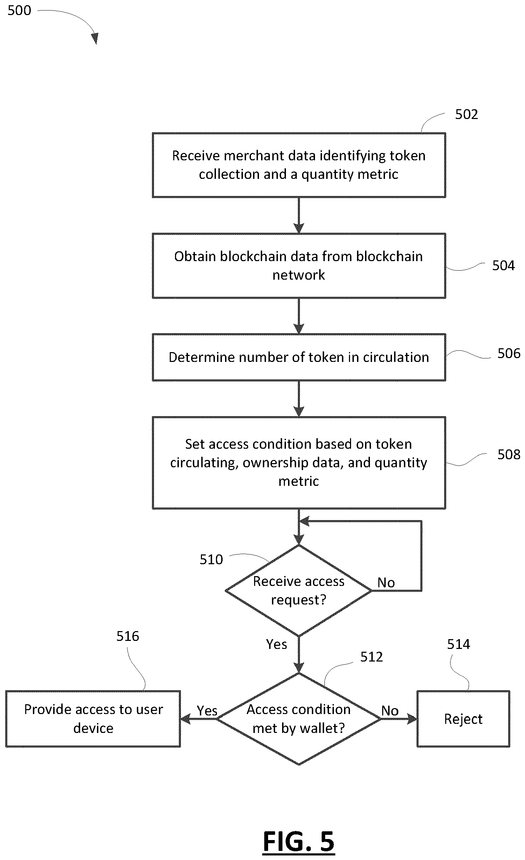

Reference will now be made to FIG. 5, which shows, in flowchart form, one example method 500 of controlling access to an online resource. The method 500 may be implemented by a computing platform, such as an e-commerce platform in some cases. In particular, the method 500 may be implemented by way of suitably-programmed software instructions stored in memory on a computing device which, when executed by one or more processors of the computing device, cause the computing device to carry out the described operations. In some cases, the method 500 may be implemented by one or more servers forming an e-commerce platform or system, such as the e-commerce system 1004 (FIG. 1). Although the following method 500 is described in the context of an e-commerce implementation, it will be appreciated that the operations of the method 500 may be generalized to apply in applications and contexts other than e-commerce.

In operation 502, an association is established between an NFT collection and a merchant account. More specifically, a link is established between the NFT collection and one or more of the merchant's products. The association may be received by the e-commerce system from a merchant via a merchant device. The merchant may determine that their products are to be associated with a particular NFT collection. For example, the merchant may market sports-related items or memorabilia and may determine that some of the product catalog may be advantageously limited to buyers having a sufficient affinity for particular sports teams, players, or other characteristics. That affinity may be based on ownership of one or more NFTs from a sports-related NFT collection. In another example, an NFT collection may relate to a particular musical artist or style of music, and the merchant may determine that products or services relating to that artist or style may advantageously be limited to buyers having a sufficient affinity that they own one or more NFTs from that NFT collection.

The association may be between the NFT collection and all of the merchant's products in some cases. In other cases, the association may be between the NFT collection and a subset of the merchant's products. For example, the subset may be a specific class of products, such as shoes, concert tickets, etc. In some cases, the subset may be a limited access class of products, such as early release tickets, or early-access products, or limited edition items. In some cases, the subset may be a particular promotion associated with identified products, such as discounted products. That is, the NFT collection may be linked to a level of discount applicable to a set or subset of products.

The NFT collection may have a set of existing NFTs recorded on the blockchain in some cases. It may also subsequently generate new NFTs on a periodic or regular basis, and may record the minting of those NFTs on the blockchain. The blockchain may be searched to identify the existing NFTs in the collection or searched periodically to identify new NFTs in the collection. In some cases, the smart contract may provide a function enabling a query and response regarding NFTs in the collection. In some cases, a third-party website or marketplace, such as OpenSea^{™} or the like, may be searchable to obtain data regarding existing or new NFTs in a collection.

Operation 502 may further include receiving a quantity metric. The quantity metric may reflect a number of available items for a certain product. The quantity metric may be based on or determined from inventory data stored in an inventory system. The quantity metric may be set by the merchant based on an intended number of qualifying wallets. That is the merchant may determine that they only wish to make N items available for exclusive or discounted access. In some cases, the quantity metric may include a time component, such as a quantity per time window; for example, N items per week or per day.

The e-commerce system may be configured to obtain blockchain data regarding the existing NFTs in the collection, as indicated by operation 504, whether from the blockchain or from a third-party source like an indexer. The blockchain data obtained may include data regarding the number of tokens in circulation for a particular token collection. The blockchain data may include ownership data, such as how many distinct wallet addresses hold at least one token from the collection.

The system may determine from the blockchain data the number of tokens in circulation in operation 506. In some cases the number of tokens in circulation may be determined in part from a count of tokens minted by the associated smart contract. In some cases, one or more minted tokens may be held in a designated "treasury" wallet address used to hold minted tokens that have not yet been transferred to a first owner wallet address. In some cases, one or more minted tokens may be held in a "bum" wallet address used as a location to store tokens that are "destroyed". The determination of the number of active tokens in circulation may be based on the number of minted tokens less the number held in a treasury wallet and the number held in a burn wallet, if any.

In operation 508, the e-commerce system may set or update an access control rule based on the number of token in circulation, ownership data if any, and the quantity metric. The access control rule is associated with a particular product item or set of product items with which the token collection is associated. The quantity metric may be used to determine an intended number of qualifying wallets, as noted above. On this basis, the system may identify one or more token criteria, such as NFT attributes for tokens in the token collection that, if set as the condition in the access control rule, would result in the intended number of qualifying wallets, or would result in the intended number of qualifying wallets within an acceptable tolerance. The token criteria may be, for example, that a wallet hold ownership of X (number) of the tokens from the collection. In some cases the token criteria may specify that the NFT has one or more particular attributes.

Once the access control rule is set or update in operation 508, the system stores that access control rule in memory in association with the product record to which it applies. When it later receives a request for access to that product record, as indicated by operation 510, the system determines that the product record is subject to an access control rule and, in operation 512, evaluates whether the device requesting access meets the access condition set in the rule. In particular, the system determines that the user device requesting access has one or more associated wallet addresses. This determination at the time of the access request or may occur earlier in a browsing session during which the system and the user device exchange data to identify the wallet address purported owned by the user device and to validate a digital signature generated by the user device to prove ownership of the associated wallet address. Once the wallet address is validated, the system may obtain ownership data through querying the blockchain network to identify NFTs or other tokens held by the wallet address. Having confirmed ownership of the NFTs (if any) held by the wallet address, the system may then assess whether the NFTs meet the access control rule condition. If not, then the access request is rejected in operation 514. Otherwise, the user device is granted the requested access in operation 516. Rejection of the access request may include providing access to a non-discounted equivalent product item, a non-limited-edition product item, etc.

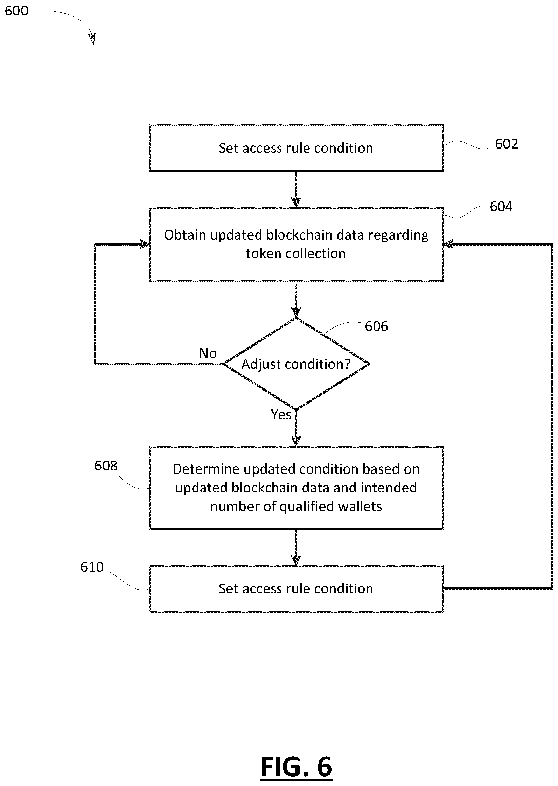

FIG. 6 shows a simplified example method 600 of updating a token-based access control rule. The method 600 may be implemented by way of suitably-programmed software instructions stored in memory on a computing device which, when executed by one or more processors of the computing device, cause the computing device to carry out the described operations. The method 600 may be implemented by a computing system, such as an e-commerce platform in some cases. In some cases, the method 600 may be implemented by one or more servers forming an e-commerce platform or system, such as the e-commerce system 1004 (FIG. 1).

In operation 602, a token-based access control rule is set. The access control rule is associated with one or more product records to gate access to those items. The condition set in the access control rule identifies one or more token criteria that must be met to enable access to the product record. As noted above, the condition may specify ownership of one or more tokens from a certain token collection, or class of token collections. The condition may specify a lack of ownership (e.g. at an instance in time, or over a period of time) of one or more tokens. The condition may specify that the tokens have one or more attributes. The access control rule may further be associated with quantity metric or an intended number of qualifying wallets.

In operation 604, the system obtains blockchain data from the blockchain network regarding the token collection. The blockchain data may be obtained by querying a blockchain node in some cases. The blockchain data may include data regarding the number of tokens in the token collection. The data may identify the number of tokens in active circulation; for example, the blockchain data may specify the number of tokens minted in that collection. In some cases, the blockchain data may specify the attributes associated with the tokens in circulation. It may further include ownership information, such as a count of individual wallets holding at least one of the tokens, or a count of individual wallets that at some point in time held at least one of the tokens (notwithstanding whether these wallets still hold those tokens).

In operation 606, the system determines whether or not to update or adjust the condition in the access control rule. This determination may be based on the blockchain data obtained in some cases. For example, the system may determine whether there has been more than a threshold change in the token collection information or ownership data since the access control rule condition was created. The threshold change may be a percentage increase or decrease, such as 10%, 15%, 20%, etc. For example, if the number of tokens in circulation has increased or decreased by more than 10% since the access control rule condition was created, then the system may be configured to determine how to adjust the condition.

In some cases the determination to adjust the condition is not based on the state of the token collection or metrics regarding the number of tokens or their attributes. Instead, the adjustment may be scheduled based on time. For instance, the access control rule may have been configured when set up to be re-evaluated on a periodic basis, such as once a day, or once a week, etc. In some cases, the periodic update of the access control rule may be associated with an inventory update schedule. For example, when the available product inventory is updated on a weekly basis the access control rule may also be updated once the inventory data has been updated, thereby tying the access rule condition update to the inventory update.

If the access rule is to be adjusted, then in operation 608 the system determines an updated condition. The updated condition may be based on the blockchain data obtained in operation 604 and an intended number of qualified wallets. The intended number of qualified wallets may be set based on a quantity metric. For example, if the merchant accounts sets the quantity metric at 100 the system may set the intended number of qualifying wallets at some specified multiple of the quantity metric, *e.g.* 200, 500, 50 etc. The quantity metric may be set based on the inventory data for the product item. The inventory data may be updated from time-to-time, as noted.

By determining an intended number of qualifying wallets, and by determining the number of tokens in circulation and/or the number of wallets holding one or more of the tokens, the system can determine to what extent it needs to impose additional criteria or conditions to reduce the number of qualifying wallets. For example, if the intended number of qualifying wallets is 100 and there are 10000 tokens in circulation, the system may determine that setting ownership of one token as a condition will result in far too many qualified wallets. The system may determine from the blockchain data, a number of wallets holding two or more of the tokens. On this basis, it may determine a condition that specifies a certain number of the tokens must be owned by a wallet to meet the condition.

In some cases, the blockchain data includes attribute data. The attribute data may specify a count of tokens having certain attributes. To take a digital avatar-based token as an example, attributes may include whether the digital avatar has glasses, has hair, has large or small eyes, has a beard, etc. Attributes may also include values for other (sometimes arbitrarily defined) keys, such as astrological sign, personality, or a quantified measure of "experience", for example. The counts of tokens in circulation having those particular attributes (or combinations of those attributes) may be used by the system to identify an attribute or combination of attributes that would reduce the number of qualified wallets to no more than the intended number of qualifying wallets. Accordingly, the system may set that attribute or combination of attributes as part of the condition in the access control rule. In some cases, the condition may specify an <OR> condition, such as that the token have attribute #1 or attribute #2 to be granted access.

In some cases, the system may remember previous access control rules used for the same product item or the same merchant, so as to try not to repeat a condition that has already been used, thereby trying to ensure different users/wallets are granted access with an update to the access control rule. This may particularly be the case where the access control rule is updated, on a regular or periodic basis, in a manner that provides access to a random subset of a set of users/wallet specified by the merchant.

Once the system identifies a condition that results in the intended number of qualifying wallets, then it sets that condition in operation 610.

In some implementations, the system may obtain merchant account approval of the automatically updated access control rule. The merchant account approval may be preset in the merchant account, *i.e.* to automatically accept and implement auto-updated access control rules. In some cases, operation 610 includes sending a notification to a merchant address regarding the updated access control rule condition and receiving a response approving or disapproving of the proposed rule.

Many of the above-described examples relate to non-fungible tokens, *i.e.* NFTs. In some cases, the access control rule may relate to fungible tokens. Fungible tokens are tokens that represent some fungible quantity. A common example is cryptocurrency, where a token may represent a quantity of cryptocurrency. In some cases, a token may represent a quantity of fiat currency, for example, if tokens were to be generated to each represent the possibility of exchange for a certain quantity of US dollars. In another example, the fungible tokens may represent a quantity of a good or service. In a computing environment, a fungible token could represent entitlement or access to a certain amount of memory in a data storage unit, or processing time on a computing device. In another example, the fungible token could represent ownership or interest in a certain quantity of a commodity, such as barrels of crude oil, kilograms of fertilizer, kWh of power, etc.

An access control rule may, in some cases, be based on a user device having one or more associated fungible tokens. In one simple example, the access control rule may set, as a condition, that the user device be associated (through its one or more wallet addresses) with at least a minimum quantity of a particular cryptocurrency. In some cases, the condition set may be that the fungible tokens be held for a minimum duration of time, or that they have been owned since at least a particular time/date, or that they were previously owned before a certain date. In some cases, the condition set may be that two or more different classes or types of fungible tokens are owned. Other such conditions or combinations of conditions may be applied in other examples.

In yet another example embodiment, the access control rule may set a condition that includes both ownership of a particular NFT, or an NFT having particular attributes, as described above, plus ownership of one or more fungible tokens. Various ancillary conditions may be incorporated into the condition in the access control rule, such as that the specified type of fungible tokens be owned in a particular quantity (e.g. tokens representing at least 50 kWh of power, or tokens representing at least 10 terabytes of data storage, etc.), or with particular ownership history (time since first owned, duration, etc.), or other such restrictions.

In any of the above-described example methods or processes it will be understood that certain operations described as occurring in sequence may be implemented in a different sequence or carried out in parallel without impacting the overall functioning of the method or process.

### Example E-commerce Platform

Although integration with a commerce platform is not required, in some embodiments, the methods disclosed herein may be performed on or in association with a commerce platform such as an e-commerce platform. Therefore, an example of a commerce platform will be described.

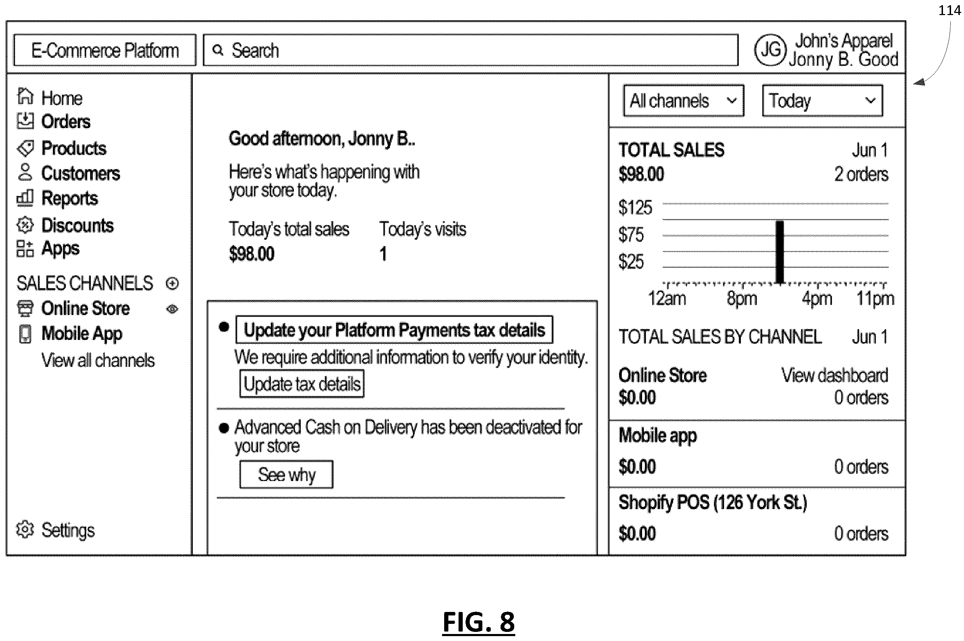

FIG. 8 illustrates an example e-commerce platform 100, according to one embodiment. The e-commerce platform 100 may be exemplary of the e-commerce platform 1004 described with reference to FIG. 1. The e-commerce platform 100 may be used to provide merchant products and services to customers. While the disclosure contemplates using the apparatus, system, and process to purchase products and services, for simplicity the description herein will refer to products. All references to products throughout this disclosure should also be understood to be references to products and/or services, including, for example, physical products, digital content (e.g., music, videos, games), software, tickets, subscriptions, services to be provided, and the like.

While the disclosure throughout contemplates that a "merchant" and a "customer" may be more than individuals, for simplicity the description herein may generally refer to merchants and customers as such. All references to merchants and customers throughout this disclosure should also be understood to be references to groups of individuals, companies, corporations, computing entities, and the like, and may represent for-profit or not-for-profit exchange of products. Further, while the disclosure throughout refers to "merchants" and "customers", and describes their roles as such, the e-commerce platform 100 should be understood to more generally support users in an e-commerce environment, and all references to merchants and customers throughout this disclosure should also be understood to be references to users, such as where a user is a merchant-user (e.g., a seller, retailer, wholesaler, or provider of products), a customer-user (e.g., a buyer, purchase agent, consumer, or user of products), a prospective user (e.g., a user browsing and not yet committed to a purchase, a user evaluating the e-commerce platform 100 for potential use in marketing and selling products, and the like), a service provider user (e.g., a shipping provider 112, a financial provider, and the like), a company or corporate user (e.g., a company representative for purchase, sales, or use of products; an enterprise user; a customer relations or customer management agent, and the like), an information technology user, a computing entity user (e.g., a computing bot for purchase, sales, or use of products), and the like. Furthermore, it may be recognized that while a given user may act in a given role (e.g., as a merchant) and their associated device may be referred to accordingly (e.g., as a merchant device) in one context, that same individual may act in a different role in another context (e.g., as a customer) and that same or another associated device may be referred to accordingly (e.g., as a customer device). For example, an individual may be a merchant for one type of product (e.g., shoes), and a customer/consumer of other types of products (e.g., groceries). In another example, an individual may be both a consumer and a merchant of the same type of product. In a particular example, a merchant that trades in a particular category of goods may act as a customer for that same category of goods when they order from a wholesaler (the wholesaler acting as merchant).

The e-commerce platform 100 provides merchants with online services/facilities to manage their business. The facilities described herein are shown implemented as part of the platform 100 but could also be configured separately from the platform 100, in whole or in part, as stand-alone services. Furthermore, such facilities may, in some embodiments, may, additionally or alternatively, be provided by one or more providers/entities.

In the example of FIG. 8, the facilities are deployed through a machine, service or engine that executes computer software, modules, program codes, and/or instructions on one or more processors which, as noted above, may be part of or external to the platform 100. Merchants may utilize the e-commerce platform 100 for enabling or managing commerce with customers, such as by implementing an e-commerce experience with customers through an online store 138, applications 142A-B, channels 110A-B, and/or through point-of-sale (POS) devices 152 in physical locations (e.g., a physical storefront or other location such as through a kiosk, terminal, reader, printer, 3D printer, and the like). The example computing device 200 of FIG. 1 may be exemplary of each POS device 152.

A merchant may utilize the e-commerce platform 100 as a sole commerce presence with customers, or in conjunction with other merchant commerce facilities, such as through a physical store (e.g., "brick-and-mortar" retail stores), a merchant off-platform website 104 (e.g., a commerce Internet website or other internet or web property or asset supported by or on behalf of the merchant separately from the e-commerce platform 100), an application 142B, and the like. However, even these "other" merchant commerce facilities may be incorporated into or communicate with the e-commerce platform 100, such as where POS devices 152 in a physical store of a merchant are linked into the e-commerce platform 100, where a merchant off-platform website 104 is tied into the e-commerce platform 100, such as, for example, through "buy buttons" that link content from the merchant off platform website 104 to the online store 138, or the like.

The online store 138 may represent a multi-tenant facility comprising a plurality of virtual storefronts. In embodiments, merchants may configure and/or manage one or more storefronts in the online store 138, such as, for example, through a merchant device 102 (e.g., computer, laptop computer, mobile computing device, and the like), and offer products to customers through a number of different channels 110A-B (e.g., an online store 138; an application 142A-B; a physical storefront through a POS device 152; an electronic marketplace, such, for example, through an electronic buy button integrated into a website or social media channel such as on a social network, social media page, social media messaging system; and/or the like). A merchant may sell across channels 110A-B and then manage their sales through the e-commerce platform 100, where channels 110A may be provided as a facility or service internal or external to the e-commerce platform 100. A merchant may, additionally or alternatively, sell in their physical retail store, at pop ups, through wholesale, over the phone, and the like, and then manage their sales through the e-commerce platform 100. A merchant may employ all or any combination of these operational modalities. Notably, it may be that by employing a variety of and/or a particular combination of modalities, a merchant may improve the probability and/or volume of sales. Throughout this disclosure the terms online store 138 and storefront may be used synonymously to refer to a merchant's online e-commerce service offering through the e-commerce platform 100, where an online store 138 may refer either to a collection of storefronts supported by the e-commerce platform 100 (e.g., for one or a plurality of merchants) or to an individual merchant's storefront (e.g., a merchant's online store).

In some embodiments, a customer may interact with the platform 100 through a customer device 150 (e.g., computer, laptop computer, mobile computing device, or the like), a POS device 152 (e.g., retail device, kiosk, automated (self-service) checkout system, or the like), and/or any other commerce interface device known in the art. The e-commerce platform 100 may enable merchants to reach customers through the online store 138, through applications 142A-B, through POS devices 152 in physical locations (e.g., a merchant's storefront or elsewhere), to communicate with customers via electronic communication facility 129, and/or the like so as to provide a system for reaching customers and facilitating merchant services for the real or virtual pathways available for reaching and interacting with customers.

In some embodiments, and as described further herein, the e-commerce platform 100 may be implemented through a processing facility. Such a processing facility may include a processor and a memory. The processor may be a hardware processor. The memory may be and/or may include a non-transitory computer-readable medium. The memory may be and/or may include random access memory (RAM) and/or persisted storage (e.g., magnetic storage). The processing facility may store a set of instructions (e.g., in the memory) that, when executed, cause the e-commerce platform 100 to perform the e-commerce and support functions as described herein. The processing facility may be or may be a part of one or more of a server, client, network infrastructure, mobile computing platform, cloud computing platform, stationary computing platform, and/or some other computing platform, and may provide electronic connectivity and communications between and amongst the components of the e-commerce platform 100, merchant devices 102, payment gateways 106, applications 142A-B , channels 110A-B, shipping providers 112, customer devices 150, point-of-sale devices 152, etc. In some implementations, the processing facility may be or may include one or more such computing devices acting in concert. For example, it may be that a plurality of co-operating computing devices serves as/to provide the processing facility. The e-commerce platform 100 may be implemented as or using one or more of a cloud computing service, software as a service (SaaS), infrastructure as a service (IaaS), platform as a service (PaaS), desktop as a service (DaaS), managed software as a service (MSaaS), mobile backend as a service (MBaaS), information technology management as a service (ITMaaS), and/or the like. For example, it may be that the underlying software implementing the facilities described herein (e.g., the online store 138) is provided as a service, and is centrally hosted (e.g., and then accessed by users via a web browser or other application, and/or through customer devices 150, POS devices 152, and/or the like). In some embodiments, elements of the e-commerce platform 100 may be implemented to operate and/or integrate with various other platforms and operating systems.

In some embodiments, the facilities of the e-commerce platform 100 (e.g., the online store 138) may serve content to a customer device 150 (using data 134) such as, for example, through a network connected to the e-commerce platform 100. For example, the online store 138 may serve or send content in response to requests for data 134 from the customer device 150, where a browser (or other application) connects to the online store 138 through a network using a network communication protocol (e.g., an internet protocol). The content may be written in machine readable language and may include Hypertext Markup Language (HTML), template language, JavaScript, and the like, and/or any combination thereof.

In some embodiments, online store 138 may be or may include service instances that serve content to customer devices and allow customers to browse and purchase the various products available (e.g., add them to a cart, purchase through a buy-button, and the like). Merchants may also customize the look and feel of their website through a theme system, such as, for example, a theme system where merchants can select and change the look and feel of their online store 138 by changing their theme while having the same underlying product and business data shown within the online store's product information. It may be that themes can be further customized through a theme editor, a design interface that enables users to customize their website's design with flexibility. Additionally, or alternatively, it may be that themes can, additionally or altematively, be customized using theme-specific settings such as, for example, settings as may change aspects of a given theme, such as, for example, specific colors, fonts, and pre-built layout schemes. In some implementations, the online store may implement a content management system for website content. Merchants may employ such a content management system in authoring blog posts or static pages and publish them to their online store 138, such as through blogs, articles, landing pages, and the like, as well as configure navigation menus. Merchants may upload images (e.g., for products), video, content, data, and the like to the e-commerce platform 100, such as for storage by the system (e.g., as data 134). In some embodiments, the e-commerce platform 100 may provide functions for manipulating such images and content such as, for example, functions for resizing images, associating an image with a product, adding and associating text with an image, adding an image for a new product variant, protecting images, and the like.

As described herein, the e-commerce platform 100 may provide merchants with sales and marketing services for products through a number of different channels 110A-B, including, for example, the online store 138, applications 142A-B, as well as through physical POS devices 152 as described herein. The e-commerce platform 100 may, additionally or altematively, include business support services 116, an administrator 114, a warehouse management system, and the like associated with running an on-line business, such as, for example, one or more of providing a domain registration service 118 associated with their online store, payment facility 120 for facilitating transactions with a customer, shipping services 122 for providing customer shipping options for purchased products, fulfillment services for managing inventory, risk and insurance services 124 associated with product protection and liability, merchant billing, and the like. Services 116 may be provided via the e-commerce platform 100 or in association with external facilities, such as through a payment gateway 106 for payment processing, shipping providers 112 for expediting the shipment of products, and the like.

In some embodiments, the e-commerce platform 100 may be configured with shipping services 122 (e.g., through an e-commerce platform shipping facility or through a third-party shipping carrier), to provide various shipping-related information to merchants and/or their customers such as, for example, shipping label or rate information, real-time delivery updates, tracking, and/or the like.

FIG. 9 depicts a non-limiting embodiment for a home page of an administrator 114. The administrator 114 may be referred to as an administrative console and/or an administrator console. The administrator 114 may show information about daily tasks, a store's recent activity, and the next steps a merchant can take to build their business. In some embodiments, a merchant may log in to the administrator 114 via a merchant device 102 (e.g., a desktop computer or mobile device), and manage aspects of their online store 138, such as, for example, viewing the online store's 138 recent visit or order activity, updating the online store's 138 catalog, managing orders, and/or the like. In some embodiments, the merchant may be able to access the different sections of the administrator 114 by using a sidebar, such as the one shown on FIG. 9. Sections of the administrator 114 may include various interfaces for accessing and managing core aspects of a merchant's business, including orders, products, customers, available reports and discounts. The administrator 114 may, additionally or alternatively, include interfaces for managing sales channels for a store including the online store 138, mobile application(s) made available to customers for accessing the store (Mobile App), POS devices, and/or a buy button. The administrator 114 may, additionally or alternatively, include interfaces for managing applications (apps) installed on the merchant's account; and settings applied to a merchant's online store 138 and account. A merchant may use a search bar to find products, pages, or other information in their store.

More detailed information about commerce and visitors to a merchant's online store 138 may be viewed through reports or metrics. Reports may include, for example, acquisition reports, behavior reports, customer reports, finance reports, marketing reports, sales reports, product reports, and custom reports. The merchant may be able to view sales data for different channels 110A-B from different periods of time (e.g., days, weeks, months, and the like), such as by using drop-down menus. An overview dashboard may also be provided for a merchant who wants a more detailed view of the store's sales and engagement data. An activity feed in the home metrics section may be provided to illustrate an overview of the activity on the merchant's account. For example, by clicking on a "view all recent activity" dashboard button, the merchant may be able to see a longer feed of recent activity on their account. A home page may show notifications about the merchant's online store 138, such as based on account status, growth, recent customer activity, order updates, and the like. Notifications may be provided to assist a merchant with navigating through workflows configured for the online store 138, such as, for example, a payment workflow, an order fulfillment workflow, an order archiving workflow, a return workflow, and the like.

The e-commerce platform 100 may provide for a communications facility 129 and associated merchant interface for providing electronic communications and marketing, such as utilizing an electronic messaging facility for collecting and analyzing communication interactions between merchants, customers, merchant devices 102, customer devices 150, POS devices 152, and the like, to aggregate and analyze the communications, such as for increasing sale conversions, and the like. For instance, a customer may have a question related to a product, which may produce a dialog between the customer and the merchant (or an automated processor-based agent/chatbot representing the merchant), where the communications facility 129 is configured to provide automated responses to customer requests and/or provide recommendations to the merchant on how to respond such as, for example, to improve the probability of a sale.

The e-commerce platform 100 may provide a financial facility 120 for secure financial transactions with customers, such as through a secure card server environment. The e-commerce platform 100 may store credit card information, such as in payment card industry data (PCI) environments (e.g., a card server), to reconcile financials, bill merchants, perform automated clearing house (ACH) transfers between the e-commerce platform 100 and a merchant's bank account, and the like. The financial facility 120 may also provide merchants and buyers with financial support, such as through the lending of capital (e.g., lending funds, cash advances, and the like) and provision of insurance. In some embodiments, online store 138 may support a number of independently administered storefronts and process a large volume of transactional data on a daily basis for a variety of products and services. Transactional data may include any customer information indicative of a customer, a customer account or transactions carried out by a customer such as. for example, contact information, billing information, shipping information, returns/refund information, discount/offer information, payment information, or online store events or information such as page views, product search information (search keywords, click-through events), product reviews, abandoned carts, and/or other transactional information associated with business through the e-commerce platform 100. In some embodiments, the e-commerce platform 100 may store this data in a data facility 134. Referring again to FIG. 8, in some embodiments the e-commerce platform 100 may include a commerce management engine 136 such as may be configured to perform various workflows for task automation or content management related to products, inventory, customers, orders, suppliers, reports, financials, risk and fraud, and the like. In some embodiments, additional functionality may, additionally or altematively, be provided through applications 142A-B to enable greater flexibility and customization required for accommodating an ever-growing variety of online stores, POS devices, products, and/or services. Applications 142A may be components of the e-commerce platform 100 whereas applications 142B may be provided or hosted as a third-party service external to e-commerce platform 100. The commerce management engine 136 may accommodate store-specific workflows and in some embodiments, may incorporate the administrator 114 and/or the online store 138.

Implementing functions as applications 142A-B may enable the commerce management engine 136 to remain responsive and reduce or avoid service degradation or more serious infrastructure failures, and the like.

Although isolating online store data can be important to maintaining data privacy between online stores 138 and merchants, there may be reasons for collecting and using cross-store data, such as, for example, with an order risk assessment system or a platform payment facility, both of which require information from multiple online stores 138 to perform well. In some embodiments, it may be preferable to move these components out of the commerce management engine 136 and into their own infrastructure within the e-commerce platform 100.

Platform payment facility 120 is an example of a component that utilizes data from the commerce management engine 136 but is implemented as a separate component or service. The platform payment facility 120 may allow customers interacting with online stores 138 to have their payment information stored safely by the commerce management engine 136 such that they only have to enter it once. When a customer visits a different online store 138, even if they have never been there before, the platform payment facility 120 may recall their information to enable a more rapid and/or potentially less-error prone (e.g., through avoidance of possible mis-keying of their information if they needed to instead re-enter it) checkout. This may provide a cross-platform network effect, where the e-commerce platform 100 becomes more useful to its merchants and buyers as more merchants and buyers join, such as because there are more customers who checkout more often because of the ease of use with respect to customer purchases. To maximize the effect of this network, payment information for a given customer may be retrievable and made available globally across multiple online stores 138.

For functions that are not included within the commerce management engine 136, applications 142A-B provide a way to add features to the e-commerce platform 100 or individual online stores 138. For example, applications 142A-B may be able to access and modify data on a merchant's online store 138, perform tasks through the administrator 114, implement new flows for a merchant through a user interface (e.g., that is surfaced through extensions / API), and the like. Merchants may be enabled to discover and install applications 142A-B through application search, recommendations, and support 128. In some embodiments, the commerce management engine 136, applications 142A-B, and the administrator 114 may be developed to work together. For instance, application extension points may be built inside the commerce management engine 136, accessed by applications 142A and 142B through the interfaces 140B and 140A to deliver additional functionality, and surfaced to the merchant in the user interface of the administrator 114.

In some embodiments, applications 142A-B may deliver functionality to a merchant through the interface 140A-B, such as where an application 142A-B is able to surface transaction data to a merchant (e.g., App: "Engine, surface my app data in the Mobile App or administrator 114"), and/or where the commerce management engine 136 is able to ask the application to perform work on demand (Engine: "App, give me a local tax calculation for this checkout").

Applications 142A-B may be connected to the commerce management engine 136 through an interface 140A-B (e.g., through REST (REpresentational State Transfer) and/or GraphQL APIs) to expose the functionality and/or data available through and within the commerce management engine 136 to the functionality of applications. For instance, the e-commerce platform 100 may provide API interfaces 140A-B to applications 142A-B which may connect to products and services external to the platform 100. The flexibility offered through use of applications and APIs (e.g., as offered for application development) enable the e-commerce platform 100 to better accommodate new and unique needs of merchants or to address specific use cases without requiring constant change to the commerce management engine 136. For instance, shipping services 122 may be integrated with the commerce management engine 136 through a shipping or carrier service API, thus enabling the e-commerce platform 100 to provide shipping service functionality without directly impacting code running in the commerce management engine 136.

Depending on the implementation, applications 142A-B may utilize APIs to pull data on demand (e.g., customer creation events, product change events, or order cancelation events, etc.) or have the data pushed when updates occur. A subscription model may be used to provide applications 142A-B with events as they occur or to provide updates with respect to a changed state of the commerce management engine 136. In some embodiments, when a change related to an update event subscription occurs, the commerce management engine 136 may post a request, such as to a predefined callback URL. The body of this request may contain a new state of the object and a description of the action or event. Update event subscriptions may be created manually, in the administrator facility 114, or automatically (e.g., via the API 140A-B). In some embodiments, update events may be queued and processed asynchronously from a state change that triggered them, which may produce an update event notification that is not distributed in real-time or near-real time.

In some embodiments, the e-commerce platform 100 may provide one or more of application search, recommendation and support 128. Application search, recommendation and support 128 may include developer products and tools to aid in the development of applications, an application dashboard (e.g., to provide developers with a development interface, to administrators for management of applications, to merchants for customization of applications, and the like), facilities for installing and providing permissions with respect to providing access to an application 142A-B (e.g., for public access, such as where criteria must be met before being installed, or for private use by a merchant), application searching to make it easy for a merchant to search for applications 142A-B that satisfy a need for their online store 138, application recommendations to provide merchants with suggestions on how they can improve the user experience through their online store 138, and the like. In some embodiments, applications 142A-B may be assigned an application identifier (ID), such as for linking to an application (e.g., through an API), searching for an application, making application recommendations, and the like.

Applications 142A-B may be grouped roughly into three categories: customer-facing applications, merchant-facing applications, integration applications, and the like. Customer-facing applications 142A-B may include an online store 138 or channels 110A-B that are places where merchants can list products and have them purchased (e.g., the online store, applications for flash sales (e.g., merchant products or from opportunistic sales opportunities from third-party sources), a mobile store application, a social media channel, an application for providing wholesale purchasing, and the like). Merchant-facing applications 142A-B may include applications that allow the merchant to administer their online store 138 (e.g., through applications related to the web or website or to mobile devices), run their business (e.g., through applications related to POS devices), to grow their business (e.g., through applications related to shipping (e.g., drop shipping), use of automated agents, use of process flow development and improvements), and the like. Integration applications may include applications that provide useful integrations that participate in the running of a business, such as shipping providers 112 and payment gateways 106.

As such, the e-commerce platform 100 can be configured to provide an online shopping experience through a flexible system architecture that enables merchants to connect with customers in a flexible and transparent manner. A typical customer experience may be better understood through an embodiment example purchase workflow, where the customer browses the merchant's products on a channel 110A-B, adds what they intend to buy to their cart, proceeds to checkout, and pays for the content of their cart resulting in the creation of an order for the merchant. The merchant may then review and fulfill (or cancel) the order. The product is then delivered to the customer. If the customer is not satisfied, they might return the products to the merchant.

In an example embodiment, a customer may browse a merchant's products through a number of different channels 110A-B such as, for example, the merchant's online store 138, a physical storefront through a POS device 152; an electronic marketplace, through an electronic buy button integrated into a website or a social media channel). In some cases, channels 110A-B may be modeled as applications 142A-B. A merchandising component in the commerce management engine 136 may be configured for creating, and managing product listings (using product data objects or models for example) to allow merchants to describe what they want to sell and where they sell it. The association between a product listing and a channel may be modeled as a product publication and accessed by channel applications, such as via a product listing API. A product may have many attributes and/or characteristics, like size and color, and many variants that expand the available options into specific combinations of all the attributes, like a variant that is size extra-small and green, or a variant that is size large and blue. Products may have at least one variant (e.g., a "default variant") created for a product without any options. To facilitate browsing and management, products may be grouped into collections, provided product identifiers (e.g., stock keeping unit (SKU)) and the like. Collections of products may be built by either manually categorizing products into one (e.g., a custom collection), by building rulesets for automatic classification (e.g., a smart collection), and the like. Product listings may include 2D images, 3D images or models, which may be viewed through a virtual or augmented reality interface, and the like.

In some embodiments, a shopping cart object is used to store or keep track of the products that the customer intends to buy. The shopping cart object may be channel specific and can be composed of multiple cart line items, where each cart line item tracks the quantity for a particular product variant. Since adding a product to a cart does not imply any commitment from the customer or the merchant, and the expected lifespan of a cart may be in the order of minutes (not days), cart objects/data representing a cart may be persisted to an ephemeral data store.

The customer then proceeds to checkout. A checkout object or page generated by the commerce management engine 136 may be configured to receive customer information to complete the order such as the customer's contact information, billing information and/or shipping details. If the customer inputs their contact information but does not proceed to payment, the e-commerce platform 100 may (e.g., via an abandoned checkout component) to transmit a message to the customer device 150 to encourage the customer to complete the checkout. For those reasons, checkout objects can have much longer lifespans than cart objects (hours or even days) and may therefore be persisted. Customers then pay for the content of their cart resulting in the creation of an order for the merchant. In some embodiments, the commerce management engine 136 may be configured to communicate with various payment gateways and services 106 (e.g., online payment systems, mobile payment systems, digital wallets, credit card gateways) via a payment processing component. The actual interactions with the payment gateways 106 may be provided through a card server environment. At the end of the checkout process, an order is created. An order is a contract of sale between the merchant and the customer where the merchant agrees to provide the goods and services listed on the order (e.g., order line items, shipping line items, and the like) and the customer agrees to provide payment (including taxes). Once an order is created, an order confirmation notification may be sent to the customer and an order placed notification sent to the merchant via a notification component. Inventory may be reserved when a payment processing job starts to avoid over-selling (e.g., merchants may control this behavior using an inventory policy or configuration for each variant). Inventory reservation may have a short time span (minutes) and may need to be fast and scalable to support flash sales or "drops", which are events during which a discount, promotion or limited inventory of a product may be offered for sale for buyers in a particular location and/or for a particular (usually short) time. The reservation is released if the payment fails. When the payment succeeds, and an order is created, the reservation is converted into a permanent (long-term) inventory commitment allocated to a specific location. An inventory component of the commerce management engine 136 may record where variants are stocked, and tracks quantities for variants that have inventory tracking enabled. It may decouple product variants (a customer-facing concept representing the template of a product listing) from inventory items (a merchant-facing concept that represents an item whose quantity and location is managed). An inventory level component may keep track of quantities that are available for sale, committed to an order or incoming from an inventory transfer component (e.g., from a vendor).

The merchant may then review and fulfill (or cancel) the order. A review component of the commerce management engine 136 may implement a business process merchant's use to ensure orders are suitable for fulfillment before actually fulfilling them. Orders may be fraudulent, require verification (e.g., ID checking), have a payment method which requires the merchant to wait to make sure they will receive their funds, and the like. Risks and recommendations may be persisted in an order risk model. Order risks may be generated from a fraud detection tool, submitted by a third-party through an order risk API, and the like. Before proceeding to fulfillment, the merchant may need to capture the payment information (e.g., credit card information) or wait to receive it (e.g., via a bank transfer, check, and the like) before it marks the order as paid. The merchant may now prepare the products for delivery. In some embodiments, this business process may be implemented by a fulfillment component of the commerce management engine 136. The fulfillment component may group the line items of the order into a logical fulfillment unit of work based on an inventory location and fulfillment service. The merchant may review, adjust the unit of work, and trigger the relevant fulfillment services, such as through a manual fulfillment service (e.g., at merchant managed locations) used when the merchant picks and packs the products in a box, purchase a shipping label and input its tracking number, or just mark the item as fulfilled. Alternatively, an API fulfillment service may trigger a third-party application or service to create a fulfillment record for a third-party fulfillment service. Other possibilities exist for fulfilling an order. If the customer is not satisfied, they may be able to return the product(s) to the merchant. The business process merchants may go through to "un-sell" an item may be implemented by a return component. Returns may consist of a variety of different actions, such as a restock, where the product that was sold actually comes back into the business and is sellable again; a refund, where the money that was collected from the customer is partially or fully returned; an accounting adjustment noting how much money was refunded (e.g., including if there was any restocking fees or goods that weren't returned and remain in the customer's hands); and the like. A return may represent a change to the contract of sale (e.g., the order), and where the e-commerce platform 100 may make the merchant aware of compliance issues with respect to legal obligations (e.g., with respect to taxes). In some embodiments, the e-commerce platform 100 may enable merchants to keep track of changes to the contract of sales over time, such as implemented through a sales model component (e.g., an append-only date-based ledger that records sale-related events that happened to an item).

### Implementations

The methods and systems described herein may be deployed in part or in whole through a machine that executes computer software, program codes, and/or instructions on a processor. The processor may be part of a server, cloud server, client, network infrastructure, mobile computing platform, stationary computing platform, or other computing platform. A processor may be any kind of computational or processing device capable of executing program instructions, codes, binary instructions and the like. The processor may be or include a signal processor, digital processor, embedded processor, microprocessor or any variant such as a co-processor (math co-processor, graphic co-processor, communication co-processor and the like) and the like that may directly or indirectly facilitate execution of program code or program instructions stored thereon. In addition, the processor may enable execution of multiple programs, threads, and codes. The threads may be executed simultaneously to enhance the performance of the processor and to facilitate simultaneous operations of the application. By way of implementation, methods, program codes, program instructions and the like described herein may be implemented in one or more threads. The thread may spawn other threads that may have assigned priorities associated with them; the processor may execute these threads based on priority or any other order based on instructions provided in the program code. The processor may include memory that stores methods, codes, instructions and programs as described herein and elsewhere. The processor may access a storage medium through an interface that may store methods, codes, and instructions as described herein and elsewhere. The storage medium associated with the processor for storing methods, programs, codes, program instructions or other type of instructions capable of being executed by the computing or processing device may include but may not be limited to one or more of a CD-ROM, DVD, memory, hard disk, flash drive, RAM, ROM, cache and the like.

A processor may include one or more cores that may enhance speed and performance of a multiprocessor. In some embodiments, the process may be a dual core processor, quad core processors, other chip-level multiprocessor and the like that combine two or more independent cores (called a die).

The methods and systems described herein may be deployed in part or in whole through a machine that executes computer software on a server, cloud server, client, firewall, gateway, hub, router, or other such computer and/or networking hardware. The software program may be associated with a server that may include a file server, print server, domain server, internet server, intranet server and other variants such as secondary server, host server, distributed server and the like. The server may include one or more of memories, processors, computer readable media, storage media, ports (physical and virtual), communication devices, and interfaces capable of accessing other servers, clients, machines, and devices through a wired or a wireless medium, and the like. The methods, programs or codes as described herein and elsewhere may be executed by the server. In addition, other devices required for execution of methods as described in this application may be considered as a part of the infrastructure associated with the server.

The server may provide an interface to other devices including, without limitation, clients, other servers, printers, database servers, print servers, file servers, communication servers, distributed servers and the like. Additionally, this coupling and/or connection may facilitate remote execution of programs across the network. The networking of some or all of these devices may facilitate parallel processing of a program or method at one or more locations without deviating from the scope of the disclosure. In addition, any of the devices attached to the server through an interface may include at least one storage medium capable of storing methods, programs, code and/or instructions. A central repository may provide program instructions to be executed on different devices. In this implementation, the remote repository may act as a storage medium for program code, instructions, and programs.

The software program may be associated with a client that may include a file client, print client, domain client, internet client, intranet client and other variants such as secondary client, host client, distributed client and the like. The client may include one or more of memories, processors, computer readable media, storage media, ports (physical and virtual), communication devices, and interfaces capable of accessing other clients, servers, machines, and devices through a wired or a wireless medium, and the like. The methods, programs or codes as described herein and elsewhere may be executed by the client. In addition, other devices required for execution of methods as described in this application may be considered as a part of the infrastructure associated with the client.

The client may provide an interface to other devices including, without limitation, servers, other clients, printers, database servers, print servers, file servers, communication servers, distributed servers and the like. Additionally, this coupling and/or connection may facilitate remote execution of programs across the network. The networking of some or all of these devices may facilitate parallel processing of a program or method at one or more locations without deviating from the scope of the disclosure. In addition, any of the devices attached to the client through an interface may include at least one storage medium capable of storing methods, programs, applications, code and/or instructions. A central repository may provide program instructions to be executed on different devices. In this implementation, the remote repository may act as a storage medium for program code, instructions, and programs.

The methods and systems described herein may be deployed in part or in whole through network infrastructures. The network infrastructure may include elements such as computing devices, servers, routers, hubs, firewalls, clients, personal computers, communication devices, routing devices and other active and passive devices, modules and/or components as known in the art. The computing and/or non-computing device(s) associated with the network infrastructure may include, apart from other components, a storage medium such as flash memory, buffer, stack, RAM, ROM and the like. The processes, methods, program codes, instructions described herein and elsewhere may be executed by one or more of the network infrastructural elements.

The methods, program codes, and instructions described herein and elsewhere may be implemented in different devices which may operate in wired or wireless networks. Examples of wireless networks include 4th Generation (4G) networks (e.g., Long-Term Evolution (LTE)) or 5th Generation (5G) networks, as well as non-cellular networks such as Wireless Local Area Networks (WLANs). However, the principles described therein may equally apply to other types of networks.

The operations, methods, programs codes, and instructions described herein and elsewhere may be implemented on or through mobile devices. The mobile devices may include navigation devices, cell phones, mobile phones, mobile personal digital assistants, laptops, palmtops, netbooks, pagers, electronic books readers, music players and the like. These devices may include, apart from other components, a storage medium such as a flash memory, buffer, RAM, ROM and one or more computing devices. The computing devices associated with mobile devices may be enabled to execute program codes, methods, and instructions stored thereon. Alternatively, the mobile devices may be configured to execute instructions in collaboration with other devices. The mobile devices may communicate with base stations interfaced with servers and configured to execute program codes. The mobile devices may communicate on a peer-to-peer network, mesh network, or other communications network. The program code may be stored on the storage medium associated with the server and executed by a computing device embedded within the server. The base station may include a computing device and a storage medium. The storage device may store program codes and instructions executed by the computing devices associated with the base station.

The computer software, program codes, and/or instructions may be stored and/or accessed on machine readable media that may include: computer components, devices, and recording media that retain digital data used for computing for some interval of time; semiconductor storage known as random access memory (RAM); mass storage typically for more permanent storage, such as optical discs, forms of magnetic storage like hard disks, tapes, drums, cards and other types; processor registers, cache memory, volatile memory, non-volatile memory; optical storage such as CD, DVD; removable media such as flash memory (e.g., USB sticks or keys), floppy disks, magnetic tape, paper tape, punch cards, standalone RAM disks, Zip drives, removable mass storage, off-line, and the like; other computer memory such as dynamic memory, static memory, read/write storage, mutable storage, read only, random access, sequential access, location addressable, file addressable, content addressable, network attached storage, storage area network, bar codes, magnetic ink, and the like.

The methods and systems described herein may transform physical and/or or intangible items from one state to another. The methods and systems described herein may also transform data representing physical and/or intangible items from one state to another, such as from usage data to a normalized usage dataset.

The elements described and depicted herein, including in flow charts and block diagrams throughout the figures, imply logical boundaries between the elements. However, according to software or hardware engineering practices, the depicted elements and the functions thereof may be implemented on machines through computer executable media having a processor capable of executing program instructions stored thereon as a monolithic software structure, as standalone software modules, or as modules that employ external routines, code, services, and so forth, or any combination of these, and all such implementations may be within the scope of the present disclosure. Examples of such machines may include, but may not be limited to, personal digital assistants, laptops, personal computers, mobile phones, other handheld computing devices, medical equipment, wired or wireless communication devices, transducers, chips, calculators, satellites, tablet PCs, electronic books, gadgets, electronic devices, devices having artificial intelligence, computing devices, networking equipment, servers, routers and the like. Furthermore, the elements depicted in the flow chart and block diagrams or any other logical component may be implemented on a machine capable of executing program instructions. Thus, while the foregoing drawings and descriptions set forth functional aspects of the disclosed systems, no particular arrangement of software for implementing these functional aspects should be inferred from these descriptions unless explicitly stated or otherwise clear from the context. Similarly, it will be appreciated that the various steps identified and described above may be varied, and that the order of steps may be adapted to particular applications of the techniques disclosed herein. All such variations and modifications are intended to fall within the scope of this disclosure. As such, the depiction and/or description of an order for various steps should not be understood to require a particular order of execution for those steps, unless required by a particular application, or explicitly stated or otherwise clear from the context.

The methods and/or processes described above, and steps thereof, may be realized in hardware, software or any combination of hardware and software suitable for a particular application. The hardware may include a general-purpose computer and/or dedicated computing device or specific computing device or particular aspect or component of a specific computing device. The processes may be realized in one or more microprocessors, microcontrollers, embedded microcontrollers, programmable digital signal processors or other programmable devices, along with internal and/or external memory. The processes may also, or instead, be embodied in an application specific integrated circuit, a programmable gate array, programmable array logic, or any other device or combination of devices that may be configured to process electronic signals. It will further be appreciated that one or more of the processes may be realized as a computer executable code capable of being executed on a machine-readable medium.

The computer executable code may be created using a structured programming language such as C, an object oriented programming language such as C++, or any other high-level or low-level programming language (including assembly languages, hardware description languages, and database programming languages and technologies) that may be stored, compiled or interpreted to run on one of the above devices, as well as heterogeneous combinations of processors, processor architectures, or combinations of different hardware and software, or any other machine capable of executing program instructions.

Thus, in one aspect, each method described above, and combinations thereof may be embodied in computer executable code that, when executing on one or more computing devices, performs the steps thereof. In another aspect, the methods may be embodied in systems that perform the steps thereof and may be distributed across devices in a number of ways, or all of the functionality may be integrated into a dedicated, standalone device or other hardware. In another aspect, the means for performing the steps associated with the processes described above may include any of the hardware and/or software described above. All such permutations and combinations are intended to fall within the scope of the present disclosure.

## Claims

1. A computer-implemented method, comprising:
generating an access condition at a server with regard to an online resource by
identifying a token collection associated with access to the online resource, wherein ownership of the tokens is managed using a blockchain,
obtaining, from a blockchain network associated with the blockchain, data regarding the token collection including a count of tokens circulating and ownership data, and
selecting, as the access condition based on the data regarding the token collection, one or more token criteria based on an intended number of qualified wallets;
receiving, at the server, an access request for the online resource from a user device associated with a wallet;
obtaining token data from the blockchain network with regard to the wallet; and
authorizing access to the online resource for the user device responsive to determining that the token data meets the access condition.

2. The method of claim 1, wherein obtaining data regarding the token collection includes querying a blockchain node.

3. The method of claim 1 or 2, wherein determining that the token data meets the access condition includes determining that tokens owned by the wallet feature the one or more token criteria.

4. The method of any one of claims 1 to 3, wherein generating the access condition includes updating a previous access condition with regard to the online resource.

5. The method of claim 4, wherein the previous access condition includes a token quantity as a token criteria, and wherein updating includes changing the token quantity as the one or more token criteria.

6. The method of claim 4 or 5, wherein the previous access condition specifies a token attribute as a token criteria, and wherein updating includes specifying a different token attribute as the one or more token criteria.

7. The method of any one of claims 4 to 6, further comprising obtaining, from the blockchain network, updated data regarding the token collection and further revising the access condition based on the updated data.

8. The method of any preceding claim, wherein selecting includes retrieving from memory previous sets of token criteria included in previous access conditions for the online resource, and selecting the one or more token criteria that result in fewer than the intended number of qualified wallets while not selecting one of the previous sets as the one or more token criteria.

9. The method of any preceding claim, further comprising determining an inventory count with regard to the online resource from an inventory system, and wherein generating further includes determining the intended number of qualified wallets based on the inventory count.

10. The method of any preceding claim, wherein identifying the token collection includes receiving, from a remote device, an association between the token collection and the online resource and storing the association in relation to the online resource.

11. The method of any preceding claim, wherein the count of tokens circulating includes a count of tokens minted minus a count of tokens destroyed.

12. A computing system, comprising:
one or more processing units;
one or more data storage units; and
memory storing processor-executable instructions that, when executed by the one or more processing units, are to cause the processing units to carry out the method of any preceding claim.

13. A computer program comprising instructions, which when executed by a computer, cause the computer to carry out the method of any of claims 1 to 11.

## Patentansprüche

1. Ein computerimplementiertes Verfahren, das Folgendes beinhaltet:
Erzeugen einer Zugriffsbedingung an einem Server in Bezug auf eine Onlineressource durch:
Identifizieren einer Tokensammlung, die mit Zugriff auf die Onlineressource assoziiert ist, wobei Besitz der Tokens unter Verwendung einer Blockchain verwaltet wird,
Erhalten, von einem Blockchain-Netzwerk, das mit der Blockchain assoziiert ist, von die Tokensammlung betreffenden Daten, die eine Anzahl von zirkulierenden Tokens umfassen, und Besitzdaten, und
Auswählen, als die Zugriffsbedingung basierend auf den die Tokensammlung betreffenden Daten, eines oder mehrerer Tokenkriterien basierend auf einer beabsichtigten Zahl qualifizierter Wallets;
Empfangen, an dem Server, einer Zugriffsanfrage für die Onlineressource von einer Benutzervorrichtung, die mit einem Wallet assoziiert ist;
Erhalten von Tokendaten von dem Blockchain-Netzwerk in Bezug auf das Wallet; und Autorisieren von Zugriff auf die Onlineressource für die Benutzervorrichtung als Antwort auf das Bestimmen, dass die Tokendaten die Zugriffsbedingungen erfüllen.

2. Verfahren gemäß Anspruch 1, wobei das Erhalten von die Tokensammlung betreffenden Daten das Abfragen eines Blockchainknotens umfasst.

3. Verfahren gemäß Anspruch 1 oder 2, wobei das Bestimmen, dass die Tokendaten die Zugriffsbedingung erfüllen, das Bestimmen umfasst, dass Tokens, die von dem Wallet besessen werden, über das eine oder die mehreren Tokenkriterien verfügen.

4. Verfahren gemäß einem der Ansprüche 1 bis 3, wobei das Erzeugen der Zugriffsbedingung das Aktualisieren einer vorherigen Zugriffsbedingung in Bezug auf die Onlineressource umfasst.

5. Verfahren gemäß Anspruch 4, wobei die vorherige Zugriffsbedingung eine Tokenmenge als ein Tokenkriterium umfasst und wobei das Aktualisieren das Ändern der Tokenmenge als das eine oder die mehreren Tokenkriterien umfasst.

6. Verfahren gemäß Anspruch 4 oder 5, wobei die vorherige Zugriffsbedingung ein Tokenattribut als ein Tokenkriterium festlegt und wobei das Aktualisieren das Festlegen eines anderen Tokenattributs als das eine oder die mehreren Tokenkriterien umfasst.

7. Verfahren gemäß einem der Ansprüche 4 bis 6, das ferner das Erhalten, von dem Blockchain-Netzwerk, von die Tokensammlung betreffenden aktualisierten Daten und ferner das Abändern der Zugriffsbedingung basierend auf den aktualisierten Daten beinhaltet.

8. Verfahren gemäß einem der vorhergehenden Ansprüche, wobei das Auswählen das Abrufen von vorherigen Sätzen von Tokenkriterien, die in vorherigen Zugriffsbedingungen für die Onlineressource umfasst waren, aus dem Speicher und das Auswählen des einen oder der mehreren Tokenkriterien, die weniger als die beabsichtigte Zahl von qualifizierten Wallets ergeben, während einer der vorherigen Sätze nicht ausgewählt wird, als das eine oder die mehreren Tokenkriterien umfasst.

9. Verfahren gemäß einem der vorhergehenden Ansprüche, das ferner das Bestimmen einer Inventaranzahl in Bezug auf die Onlineressource aus einem Inventarsystem beinhaltet und wobei das Erzeugen ferner das Bestimmen der beabsichtigten Zahl von qualifizierten Wallets basierend auf der Inventaranzahl umfasst.

10. Verfahren gemäß einem der vorhergehenden Ansprüche, wobei das Identifizieren der Tokensammlung das Empfangen, von einer abgesetzten Vorrichtung, einer Assoziation zwischen der Tokensammlung und der Onlineressource und das Speichern der Assoziation im Hinblick auf die Onlineressource umfasst.

11. Verfahren gemäß einem der vorhergehenden Ansprüche, wobei die Anzahl von zirkulierenden Tokens eine Anzahl von geprägten Tokens abzüglich einer Anzahl von zerstörten Tokens umfasst.

12. Ein Rechensystem, das Folgendes beinhaltet:
eine oder mehrere Verarbeitungseinheiten;
eine oder mehrere Datenspeichereinheiten; und
einen Speicher, der prozessorausführbare Anweisungen speichert, die, wenn sie durch die eine oder die mehreren Verarbeitungseinheiten ausgeführt werden, bewirken sollen, dass die Verarbeitungseinheiten das Verfahren gemäß einem der vorhergehenden Ansprüche vornehmen.

13. Ein Computerprogramm, das Anweisungen beinhaltet, die, wenn sie durch einen Computer ausgeführt werden, bewirken, dass der Computer das Verfahren gemäß einem der Ansprüche 1 bis 11 vornimmt.

## Revendications

1. Un procédé mis en œuvre par ordinateur, comprenant :
la génération d'une condition d'accès au niveau d'un serveur en ce qui concerne une ressource en ligne par
identification d'une collection de jetons associés à un accès à la ressource en ligne, où l'appartenance des jetons est gérée en utilisant une chaîne de blocs, obtention, auprès d'un réseau de chaînes de blocs associé à la chaîne de blocs, de données concernant la collection de jetons incluant un décompte de jetons en circulation et des données d'appartenance, et
sélection, comme condition d'accès sur la base des données concernant la collection de jetons, d'un ou plusieurs critères de jetons sur la base d'un nombre prévu de portefeuilles qualifiés ;
la réception, au niveau du serveur, d'une demande d'accès pour la ressource en ligne en provenance d'un dispositif utilisateur associé à un portefeuille ;
l'obtention de données de jeton auprès du réseau de chaînes de blocs en ce qui concerne le portefeuille ; et
l'autorisation d'accès à la ressource en ligne pour le dispositif utilisateur en réponse à la détermination que les données de jeton satisfont à la condition d'accès.

2. Le procédé de la revendication 1, où l'obtention de données concernant la collection de jetons inclut l'interrogation d'un nœud de chaîne de blocs.

3. Le procédé de la revendication 1 ou de la revendication 2, où la détermination que les données de jeton satisfont à la condition d'accès inclut la détermination que des jetons appartenant au portefeuille présentent les un ou plusieurs critères de jeton.

4. Le procédé de n'importe laquelle des revendications 1 à 3, où la génération de la condition d'accès inclut la mise à jour d'une condition d'accès précédente en ce qui concerne la ressource en ligne.

5. Le procédé de la revendication 4, où la condition d'accès précédente inclut une quantité de jetons comme critère de jetons, et où la mise à jour inclut la modification de la quantité de jetons comme les un ou plusieurs critères de jeton.

6. Le procédé de la revendication 4 ou de la revendication 5, où la condition d'accès précédente spécifie un attribut de jeton comme critère de jeton, et où la mise à jour inclut la spécification d'un attribut de jeton différent comme les un ou plusieurs critères de jeton.

7. Le procédé de n'importe laquelle des revendications 4 à 6, comprenant en outre l'obtention, auprès du réseau de chaînes de blocs, de données mises à jour concernant la collection de jetons et en outre la révision de la condition d'accès sur la base des données mises à jour.

8. Le procédé de n'importe quelle revendication précédente, où la sélection inclut la récupération auprès d'une mémoire d'ensembles précédents de critères de jetons inclus dans des conditions d'accès précédentes pour la ressource en ligne, et la sélection des un ou plusieurs critères de jetons qui résultent en un nombre inférieur au nombre prévu de portefeuilles qualifiés tout en ne sélectionnant pas l'un des ensembles précédents comme les un ou plusieurs critères de jetons.

9. Le procédé de n'importe quelle revendication précédente, comprenant en outre la détermination d'un décompte d'inventaire en ce qui concerne la ressource en ligne en provenance d'un système d'inventaire, et où la génération inclut en outre la détermination du nombre prévu de portefeuilles qualifiés sur la base du décompte d'inventaire.

10. Le procédé de n'importe quelle revendication précédente, où l'identification de la collection de jetons inclut la réception, en provenance d'un dispositif distant, d'une association entre la collection de jetons et la ressource en ligne et le stockage de l'association en rapport avec la ressource en ligne.

11. Le procédé de n'importe quelle revendication précédente, où le décompte de jetons en circulation inclut un décompte de jetons frappés moins un décompte de jetons détruits.

12. Un système informatique, comprenant :
une ou plusieurs unités de traitement ;
une ou plusieurs unités de stockage de données ; et
une mémoire stockant des instructions exécutables par processeur qui, lorsqu'elles sont exécutées par les une ou plusieurs unités de traitement, doivent amener les unités de traitement à effectuer le procédé de n'importe quelle revendication précédente.

13. Un programme d'ordinateur comprenant des instructions qui, lorsqu'elles sont exécutées par un ordinateur, amènent l'ordinateur à effectuer le procédé de n'importe lesquelles des revendications 1 à 11.
